(19) Europäisches Patentamt
European Patent Office
Office européen des brevets

(11) **EP 4 563 427 A1**

(12) **EUROPEAN PATENT APPLICATION**
published in accordance with Art. 153(4) EPC

(43) Date of publication:
**04.06.2025 Bulletin 2025/23**

(21) Application number: **22955360.7**

(22) Date of filing: **18.08.2022**

(51) International Patent Classification (IPC):
**B60W 30/09** (2012.01)    **G08G 1/16** (2006.01)
**G08G 1/0967** (2006.01)

(52) Cooperative Patent Classification (CPC):
**B60W 30/09; G08G 1/0967; G08G 1/16**

(86) International application number:
**PCT/CN2022/113426**

(87) International publication number:
**WO 2024/036580 (22.02.2024 Gazette 2024/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shenzhen Yinwang Intelligent Technologies Co., Ltd.**
**Shenzhen, Guangdong 518129 (CN)**

(72) Inventors:
• **SHEN, Zihao**
  **Shenzhen, Guangdong 518129 (CN)**

• **WANG, Chao**
  **Shenzhen, Guangdong 518129 (CN)**
• **ZHU, Liangfan**
  **Shenzhen, Guangdong 518129 (CN)**
• **ZHAO, Bin**
  **Shenzhen, Guangdong 518129 (CN)**
• **DAI, Zhengchen**
  **Shenzhen, Guangdong 518129 (CN)**

(74) Representative: **Maiwald GmbH**
**Engineering**
**Elisenhof**
**Elisenstrasse 3**
**80335 München (DE)**

(54) **MOVEMENT PATH PLANNING METHOD AND APPARATUS AND INTELLIGENT DRIVING DEVICE**

(57)    This application provides a motion trajectory planning method and apparatus, and an intelligent driving device. The method includes: obtaining a planned traveling path and a first motion parameter of a first intelligent driving device; obtaining a predicted motion trajectory and a second motion parameter of a first object; when the planned traveling path overlaps the predicted motion trajectory, determining a planned motion trajectory of the first intelligent driving device based on the first motion parameter and the second motion parameter, where the planned motion trajectory includes a motion trajectory in which the first intelligent driving device grabs a way of or yields to the first object at a first preset velocity; and controlling the first intelligent driving device to travel based on the planned motion trajectory. The method in this application may be applied to an object that can move autonomously, for example, an intelligent vehicle or an intelligent robot, to reduce problems such as unexpected and frequent mistaken heavy and light braking, and mistaken stopping of the autonomous moving object, thereby helping improve passing efficiency of the autonomous moving object.

1800

S1810: Obtain a planned traveling path and a first motion parameter of a first intelligent driving device, where the first motion parameter includes a velocity and/or an acceleration of the first intelligent driving device

S1820: Obtain a predicted motion trajectory and a second motion parameter of a first object, where the second motion parameter includes a velocity and/or an acceleration of the first object

S1830: When the planned traveling path overlaps the predicted traveling path, determine a planned motion trajectory of the first intelligent driving device based on the first motion parameter and the second motion parameter, where the planned motion trajectory includes a motion trajectory in which the first intelligent driving device grabs a way of or yields to the first object at a first preset velocity

S1840: Control the first intelligent driving device to travel based on the planned motion trajectory

FIG. 18

**Description**

**TECHNICAL FIELD**

This application relates to the field of intelligent driving, and more specifically, to a motion trajectory planning method and apparatus, and an intelligent driving device.

**BACKGROUND**

In the field of vehicle autonomous driving, a decision-making module of a vehicle labels an obstacle, and provides a proper input for a motion planning module, to ensure that the autonomous vehicle properly responds to a surrounding obstacle. Conventional decision-making and planning based on a finite state machine (finite state machine, FSM) is usually affected by target trajectory prediction precision. For example, when a target is a pedestrian or a non-motor vehicle, a motion direction is unclear because of a large degree of freedom of motion of the target, and consequently, a trajectory prediction result fluctuates greatly. A predicted motion trajectory of the target usually frequently intrudes a driving road of the autonomous vehicle. In some scenarios, for example, on a road on which both a motor vehicle and a non-motor vehicle travel or at an intersection without an indicator, improper trajectory prediction of the target may cause problems such as unexpected and frequent light and heavy braking, mistaken stopping, and continuous yielding of the autonomous vehicle. This leads to low passing efficiency of the autonomous vehicle and poor user ride experience.

**SUMMARY**

This application provides a motion trajectory planning method and apparatus, and an intelligent driving device, to reduce problems such as unexpected and frequent light and heavy braking, unexpected stopping, continuous yielding, and simultaneous starting and stopping of the intelligent driving device, thereby improving passing efficiency of the intelligent driving device and improving user ride experience.

The intelligent driving device in this application may include a means of transportation on land, a means of transportation on water, a means of transportation in airs, an industrial device, an agricultural device, an entertainment device, or the like. For example, the intelligent driving device may be a vehicle. The vehicle is a vehicle in a broad sense, and may be a means of transportation (like a commercial vehicle, a passenger vehicle, a motorcycle, a flight vehicle, or a train), an industrial vehicle (like a forklift, a trailer, or a tractor), an engineering vehicle (like an excavator, a bulldozer, or a crane), an agricultural device (like a lawn mower or a harvester), a recreation device, a toy vehicle, or the like. A type of the vehicle is not specifically limited in embodiments of this application. For another example, the intelligent driving device may be a means of transportation like an airplane or a ship.

According to a first aspect, a motion trajectory planning method is provided, which is applied to a first intelligent driving device that can move autonomously. The method may include: obtaining a planned traveling path and a first motion parameter of a first intelligent driving device, where the first motion parameter includes a velocity and/or an acceleration of the first intelligent driving device; obtaining a predicted motion trajectory and a second motion parameter of a first object, where the second motion parameter includes a velocity and/or an acceleration of the first object; when the planned traveling path overlaps the predicted motion trajectory, determining a planned motion trajectory of the first intelligent driving device based on the first motion parameter and the second motion parameter, where the planned motion trajectory includes a motion trajectory in which the first intelligent driving device grabs a way of or yields to the first object at a first preset velocity; and controlling the first intelligent driving device to travel based on the planned motion trajectory.

In some possible implementations, the first preset velocity may be a relatively low velocity at which a driver and a passenger of the first intelligent driving device feel safe, and may be adjusted based on a radical degree of the driver and the passenger.

In some possible implementations, the first preset velocity is greater than or equal to 3 kilometers per hour and less than or equal to 15 kilometers per hour. For example, the first preset velocity may be 5 km/h, or may be 10 km/h, or may be another velocity.

It should be noted that, in this application, whether the first intelligent driving device grabs a way of the first object or yields to the first object is determined based on a specific object that passes through a conflict area earlier. If the first intelligent driving device passes through the conflict area earlier than the first object, it is considered that the first intelligent driving device grabs a way of the first object; or if the first intelligent driving device passes through the conflict area later than the first object, it is considered that the first intelligent driving device yields to the first object. The conflict area is an area in which a predicted planned path of the first intelligent driving device overlaps a deduced trajectory of the first object.

In the foregoing technical solution, on the premise of ensuring safety and complying with traffic regulations, the first intelligent driving device can actively keep a relatively low velocity to probe a behavior of the first object, so that the planned motion trajectory of the first intelligent driving device is not prone to be affected by trajectory prediction precision of the first object. When the first intelligent driving device yields to the first object, the first intelligent driving device may travel at the first preset velocity without a need to stop. This helps improve traveling stability of the first intelligent driving device. When the first intelligent driving device carries a passenger, comfort of the passenger can be improved, and ride experience of the passenger can be improved. In addition, because the first intelligent driving device does not need to stop while yielding to the first object, passing efficiency of the first intelligent driving device can be further improved. When the first intelligent driving device grabs a way of the first object at the first preset velocity, because the first intelligent driving device travels at a relatively low velocity, the first object may adjust a motion trajectory of the first object based on a motion trajectory of the first intelligent driving device, so that the first intelligent driving device can be prevented from continuously yielding to the first object. This helps improve passing efficiency of the first intelligent driving device. Particularly, in a scenario like a narrow road on which both a motor vehicle and a non-motor vehicle may travel, or an intersection without an indicator, the first intelligent driving device does not have problems such as unexpected and frequent mistaken light and heavy braking, mistaken stopping, continuous yielding, and simultaneous starting and stopping. This helps improve traveling stability and passing efficiency of the first intelligent driving device.

For example, the first intelligent driving device may be a vehicle that can move autonomously, or may be another object that can move autonomously, for example, an intelligent robot.

For example, the first object may be another intelligent driving device, including an intelligent driving device that can move autonomously and/or an intelligent driving device that is manually controlled. The intelligent driving device may be a motor vehicle, or may be a non-motor vehicle. The first object may alternatively be a person, or may be another object that can move autonomously in addition to the intelligent driving device.

For example, the planned traveling path of the first intelligent driving device may be a path that is generated by a planning and control module of the first intelligent driving device and that is expected to travel by the first intelligent driving device in a future period of time. It should be understood that the path may include only spatial location information.

For example, the predicted motion trajectory of the first object may be a motion trajectory that is of the first object in the future period of time and that is predicted by a trajectory prediction module of the first intelligent driving device based on the obtained location, velocity, and/or acceleration of the first object. In some possible implementations, the predicted motion trajectory of the first object may alternatively be sent by a cloud or another facility to the first intelligent driving device.

It should be understood that the "future period of time" may be 10 seconds, or may be 20 seconds, or may be other duration.

It should be understood that, when the planned traveling path overlaps the predicted motion trajectory, a traveling trajectory of the first intelligent driving device needs to be planned, to ensure safety of interaction between the first intelligent driving device and the first object and ride experience of a user in the first intelligent driving device. In this case, a first game strategy may be determined based on the first motion parameter of the first intelligent driving device and the motion parameter of the first object, to further determine the planned motion trajectory of the first intelligent driving device.

In some possible implementations, when the first motion parameter includes only the velocity of the first intelligent driving device, the acceleration of the first intelligent driving device may be deduced based on the velocity of the first intelligent driving device. When the second motion parameter includes only the velocity of the first object, the acceleration of the first object may be deduced based on the velocity of the first object. When the first motion parameter includes only the acceleration of the first intelligent driving device, the velocity of the first intelligent driving device may be deduced based on location information in the planned traveling path of the first intelligent driving device and with reference to the acceleration. When the second motion parameter includes only the acceleration of the first object, the velocity of the first object may be deduced based on location information in the predicted motion trajectory of the first object and with reference to the acceleration.

With reference to the first aspect, in some implementations of the first aspect, the determining the planned motion trajectory based on the first motion parameter and the second motion parameter includes: determining a first deduced trajectory of the first intelligent driving device based on a first sampling acceleration and the first motion parameter, where the first sampling acceleration is an acceleration that is determined in a sampling space and that may be reached by the first intelligent driving device; determining a second deduced trajectory of the first object based on a second sampling acceleration and the second motion parameter, where the second sampling acceleration is an acceleration that is determined in the sampling space and that may be reached by the first object; when the first deduced trajectory and the second deduced trajectory indicate that the first intelligent driving device does not collide with the first object, or that the first object collides with a side enclosure or a tail of the first intelligent driving device in a traveling direction of the first object at a first moment, determining the planned motion trajectory based on the first deduced trajectory and the second deduced trajectory, where the first moment is a moment after a current moment.

It should be understood that a plurality of groups of first sampling acceleration and second sampling acceleration pairs may be obtained in the sampling space, and further, a plurality of groups of first deduced trajectory and second deduced trajectory pairs are determined. Further, the planned motion trajectory of the first intelligent driving device may be determined based on a pair with a smallest strategy cost of autonomous driving in the plurality of groups of first deduced trajectory and second deduced trajectory pairs.

For example, in the sampling space, a minimum value of the first sampling acceleration and the second sampling acceleration may be -4 m/s$^2$, and a maximum value may be 3 m/s$^2$. In the foregoing plurality of groups of first sampling acceleration and second sampling acceleration pairs obtained in the sampling space, a sampling interval between two groups of first sampling accelerations may be 1 m/s$^2$, or may be another value. A sampling interval between two groups of second sampling accelerations may be 1 m/s$^2$, or may be another value. It should be understood that the second deduced trajectory is a deduced possible motion trajectory of the first object.

In some possible implementations, that both the first intelligent driving device and the first object are vehicles is used as an example. When both the first intelligent driving device and the first object are in a traveling state, "the first object collides with a side enclosure or a tail of the first intelligent driving device in a traveling direction of the first object" may be understood as that a head of the first object collides with a part of the body other than the head of the first intelligent driving device. Alternatively, if the first object is in a reverse state, a tail of the first object collides with a part other than the head of the body of the first intelligent driving device.

In some possible implementations, it may be determined, based on the first deduced trajectory and the second deduced trajectory, that the first intelligent driving device collides with the first object (a collision part of the first intelligent driving device is not limited), and when the collision occurs, the first intelligent driving device is still. In this case, the planned motion trajectory may alternatively be determined based on the first deduced trajectory and the second deduced trajectory.

In some possible implementations, it may be determined, based on the first deduced trajectory and the second deduced trajectory, that the first intelligent driving device collides with the first object, and when the collision manner is that the first intelligent driving device collides with a side enclosure or a tail of the first object in a traveling direction of the first intelligent driving device, the first deduced trajectory and the second deduced trajectory are ignored, that is, the planned motion trajectory is no longer determined based on the first deduced trajectory and the second deduced trajectory.

In the foregoing technical solution, the game strategy of the first intelligent driving device may be determined based on whether the first intelligent driving device collides with the first object and a collision type. This helps improve traveling safety of the first intelligent driving device.

With reference to the first aspect, in some implementations of the first aspect, the first motion parameter includes the velocity and/or the acceleration of the first intelligent driving device, and the determining a first deduced trajectory of the first intelligent driving device based on a first sampling acceleration and the first motion parameter includes: determining a first deduced sub-trajectory based on the first sampling acceleration and the velocity and/or the acceleration of the first intelligent driving device, where a velocity of the first intelligent driving device at an end point of the first deduced sub-trajectory is the first preset velocity; determining a second deduced sub-trajectory based on the first preset velocity, where the end point of the first deduced sub-trajectory is a start point of the second deduced sub-trajectory; and determining the first deduced trajectory based on the first deduced sub-trajectory and the second deduced sub-trajectory.

It should be noted that the "end point of the first deduced sub-trajectory" is not a point at which the first intelligent driving device stops moving, the "end point of the first deduced sub-trajectory" is only used as a feature for distinguishing two deduced sub-trajectory segments with different features in the first deduced trajectory, and the "end point of the first deduced sub-trajectory" may also be referred to as the "start point of the second deduced sub-trajectory".

In some possible implementations, when the first sampling acceleration is a negative value, and a current acceleration of the first intelligent driving device is not equal to the first sampling acceleration, the first deduced sub-trajectory may include a trajectory in which the acceleration of the first intelligent driving device changes from the current acceleration to the first sampling acceleration. When the acceleration of the first intelligent driving device is changed to the first sampling acceleration, the velocity of the first intelligent driving device has not decreased to the first preset velocity. In this case, the first deduced sub-trajectory may further include a trajectory in which the first intelligent driving device travels at the first sampling acceleration to decrease the velocity of the first intelligent driving device to the first preset velocity.

In some possible implementations, when the first sampling acceleration is a positive value, and a current acceleration of the first intelligent driving device is not equal to the first sampling acceleration, the first deduced sub-trajectory may include a trajectory in which the acceleration of the first intelligent driving device changes from the current acceleration to the first sampling acceleration. When the acceleration of the first intelligent driving device is changed to the first sampling acceleration, the velocity of the first intelligent driving device has not increased to the first preset velocity. In this case, the first deduced sub-trajectory may further include a trajectory in which the first intelligent driving device travels at the first sampling acceleration to increase the velocity of the first intelligent driving device to the first preset velocity.

In some possible implementations, if the first sampling acceleration is equal to a current acceleration of the first intelligent driving device, and the current velocity of the first intelligent driving device is not equal to the first preset velocity, the first deduced sub-trajectory may include a trajectory in which the first intelligent driving device travels at the current acceleration (namely, the first sampling acceleration) to change the current velocity to the first preset velocity.

In some possible implementations, if the first sampling acceleration is not equal to a current acceleration of the first intelligent driving device, and the current velocity of the first intelligent driving device is equal to the first preset velocity, the first deduced sub-trajectory may be null. That is, the second deduced sub-trajectory is directly determined based on the current velocity (namely, the first preset velocity).

In some possible implementations, a first deduced sub-trajectory may be further determined based on the first sampling acceleration and the velocity and/or the acceleration of the first intelligent driving device, where a velocity of the first intelligent driving device at an end point of the first deduced sub-trajectory is a second velocity, and the second velocity is a highest velocity at which the first intelligent driving device can travel or a highest velocity limit of a road section on which the first intelligent driving device travels; and a second deduced sub-trajectory is determined based on the second velocity. The first deduced trajectory includes the first deduced sub-trajectory and the second deduced sub-trajectory.

For example, when the first sampling acceleration is a positive value, and a current acceleration of the first intelligent driving device is not equal to the first sampling acceleration, the first deduced sub-trajectory may include a trajectory in which the acceleration of the first intelligent driving device changes from the current acceleration to the first sampling acceleration. When the acceleration of the first intelligent driving device is changed to the first sampling acceleration, the velocity of the first intelligent driving device has not increased to the second preset velocity. In this case, the first deduced sub-trajectory may further include a trajectory in which the first intelligent driving device travels at the first sampling acceleration to increase the velocity of the first intelligent driving device to the second preset velocity.

In some possible implementations, that a first deduced trajectory of the first intelligent driving device may alternatively be determined based on a second sampling acceleration and the first motion parameter may specifically include: determining a third deduced sub-trajectory based on the second sampling acceleration and the velocity and/or the acceleration of the first intelligent driving device, where a velocity of the first intelligent driving device at an end point of the third deduced sub-trajectory is a third velocity or zero, and the third velocity is a highest velocity at which the first intelligent driving device can travel or a highest velocity limit of a road section on which the first intelligent driving device travels; and when the velocity of the first intelligent driving device at the end point of the third deduced sub-trajectory is the third velocity, determining a fourth deduced sub-trajectory based on the third velocity, where the first deduced trajectory includes the third deduced sub-trajectory, or the first deduced trajectory includes the third deduced sub-trajectory and the fourth deduced sub-trajectory, and the end point of the third deduced sub-trajectory is a start point of the fourth deduced sub-trajectory.

It should be understood that the "deduced sub-trajectory" in the foregoing technical solution may be understood as a set of points at which a location of the first intelligent driving device changes with time in a forward direction of the first intelligent driving device, and each point does not include a location perpendicular to the forward direction of the first intelligent driving device. For example, if the first intelligent driving device is an intelligent driving device, the "forward direction of the first intelligent driving device" may be a direction that is in a plane parallel to the ground and that is parallel to a longitudinal symmetric plane of the intelligent driving device.

In the foregoing technical solution, when trajectory planning of the first intelligent driving device in the forward direction of the first intelligent driving device is performed, the velocity of the first intelligent driving device is decreased to the first preset velocity at most, so that the velocity of the first intelligent driving device can be prevented from being decreased to zero, and frequent stopping of the first intelligent driving device can be effectively avoided. This helps improve passing efficiency of the first intelligent driving device. When the first intelligent driving device carries a passenger, ride experience of the passenger can be further improved.

With reference to the first aspect, in some implementations of the first aspect, determining a second deduced trajectory of the first object based on a third sampling acceleration and the second motion parameter includes: determining a fifth deduced sub-trajectory based on the third sampling acceleration and the velocity and/or the acceleration of the first object, where a velocity of the first object at an end point of the fifth deduced sub-trajectory is a fourth velocity or zero, and the fourth velocity is a highest velocity at which the first object can travel or a highest velocity limit of a road section on which the first object travels; and when the velocity of the first intelligent driving device at the end point of the fifth deduced sub-trajectory is the fourth velocity, determining a sixth deduced sub-trajectory based on the fourth velocity, where the second deduced trajectory includes the fifth deduced sub-trajectory, or the second deduced trajectory includes the fifth deduced sub-trajectory and the sixth deduced sub-trajectory.

With reference to the first aspect, in some implementations of the first aspect, the determining the planned motion trajectory based on the first deduced trajectory and the second deduced trajectory includes: determining a first game strategy based on the first deduced trajectory and the second deduced trajectory, where the first game strategy indicates the first intelligent driving device to grab a way of or yields to the first object at the first preset velocity; and when first duration is greater than a first time threshold, determining the planned motion trajectory based on the first game strategy, the planned traveling path, and the second deduced trajectory.

For example, the first time threshold may be 0.1 second, or may be 0.3 second, or the first time threshold may be another value.

It should be understood that, in a process of moving the first intelligent driving device and the first object, a plurality of groups of deduced trajectory pairs may be deduced in real time based on the first motion parameter of the first intelligent driving device and the second motion parameter of the first object, and different game strategies may be determined based on different deduced trajectory pairs. In this application, the game strategy may include: The first intelligent driving device grabs a way of the first object at the first preset velocity; the first intelligent driving device yields to the first object at the first preset velocity; and the first intelligent driving device grabs a way of or yields to the first object in a non-creep manner.

In some possible implementations, a control apparatus of the first intelligent driving device determines a game strategy once every fixed duration. For example, the fixed duration may be 20 milliseconds, or may be 50 milliseconds.

When the game strategy is determined based on the deduced trajectory pair, a game strategy determined in a current frame (or a current period) may be different from a game strategy determined in a previous frame (or a previous period). To prevent instability that is of the planned motion trajectory and that is caused by frequent changes of the game strategy, this application proposes that the planned motion trajectory is determined based on the first game strategy when duration of the first game strategy is determined to be greater than the first time threshold. It is assumed that the first game strategy is that the first intelligent driving device grabs a way of the first object at the first preset velocity, a second game strategy is that the first intelligent driving device grabs a way of or yields to the first object in a non-creep manner, and a third game strategy is that the first intelligent driving device yields to the first object at the first preset velocity. For example, the fixed duration is 20 milliseconds and the first time threshold is 0.1 second. If the determined game strategy is the second game strategy before the game strategy is determined as the first game strategy, the game strategy needs to be determined as the first game strategy for five consecutive times, and then the planned motion trajectory is further determined based on the first game strategy, the planned traveling path, and the second deduced trajectory.

In some possible implementations, a value of the first time threshold may be determined based on a game strategy before the game strategy is determined as the first game strategy. In some possible implementations, if the game strategy determined before the first game strategy is determined is the second game strategy, the first time threshold is a first threshold; or if the game strategy determined before the first game strategy is determined is the third game strategy, the first time threshold is a second threshold. The first threshold is less than the second threshold. For example, the first threshold may be 0.1 second, and the second threshold may be 0.3 second.

In some possible implementations, if the game strategy determined after the first game strategy is determined is the second game strategy, and duration of the second game strategy is greater than a third threshold, the planned motion trajectory is determined based on the second game strategy. The third threshold is greater than the second threshold. For example, the first time threshold is the second threshold. The first threshold is less than the second threshold. For example, the third threshold may be 0.5 second.

In the foregoing technical solution, when a game strategy changes, whether to re-plan a trajectory based on the game strategy may be determined based on duration of a changed game strategy. When the duration of the changed game strategy does not meet a condition, the motion trajectory is not re-planned, so that frequent changes of the game strategy can be avoided, and stability of planning a motion trajectory can be improved.

With reference to the first aspect, in some implementations of the first aspect, the determining the planned motion trajectory based on the first game strategy, the planned traveling path, and the second deduced trajectory includes: determining, based on the planned traveling path and the second deduced trajectory, a time period in which a first location space of the first object occupies a second location space of the first intelligent driving device; and determining the planned motion trajectory based on the first game strategy, the second location space, and the time period, where the planned motion trajectory includes a trajectory in which the first intelligent driving device travels at the first preset velocity in the second location space, or the planned motion trajectory includes a trajectory in which the first intelligent driving device travels at the first preset velocity in the time period.

In some possible implementations, the determining the planned motion trajectory based on the first game strategy, the second location space, and the time period includes: determining a third location space based on the first game strategy, the second location space, and a distance threshold safedis; determining a first time period based on the time period and a time threshold TimeGap; and determining the planned motion trajectory based on the first time period, the first preset velocity, and the third location space.

With reference to the first aspect, in some implementations of the first aspect, before the determining the first game strategy based on the first deduced trajectory and the second deduced trajectory, the method further includes: determining that a strategy cost of a deduced trajectory pair including the first deduced trajectory and the second deduced trajectory is the smallest.

For example, the strategy cost may include a security strategy cost, and may further include at least one of a comfort strategy cost, a passability strategy cost, and a right-of-way strategy cost. Specifically, the security strategy cost represents traveling safety of a moving object, and a lower security indicates a higher strategy cost. The comfort strategy cost represents comfort of a user in the moving object, and generally, a higher acceleration change rate of the moving object indicates poorer comfort and a higher strategy cost. The passability strategy cost represents passability of the moving object passing through a conflict point. For example, a larger difference between calibration time and time at which the first deduced trajectory of the first intelligent driving device passes through the conflict point indicates poorer passability and a higher strategy cost. The calibration time is time at which the deduced trajectory of the first intelligent driving device passes through the conflict point when a lateral offset of the first intelligent driving device is 0 and a sampling acceleration is 0. The right-of-way strategy cost represents whether a motion status of an object with a high right-of-way changes. If the first deduced trajectory and second deduced trajectory pair changes the motion status of the object with the high right-of-way, the strategy cost is high.

It should be understood that the "moving object" may be the first intelligent driving device, or may be the first object.

In some possible implementations, the strategy cost may include only the security strategy cost. Alternatively, in addition to the security strategy cost, the strategy cost may further include the comfort strategy cost, the passability strategy cost, and the right-of-way strategy cost of the first intelligent driving device and the first object, and weights of the strategy costs may be different. In some possible implementations, the weight of each strategy cost may alternatively change with a traveling scenario.

In some possible implementations, a minimum value of the strategy cost may be 0.

For example, the first object is an intelligent driving device. When it is determined, based on the first deduced trajectory and the second deduced trajectory, that the first object in the traveling direction of the first object collides with the first intelligent driving device in a direction that deviates from the traveling direction of the first intelligent driving device, an overall strategy cost may be determined with reference to a velocity of the first object at the collision location. It should be understood that, if the strategy cost includes only the security strategy cost, when a plurality of groups of first deduced trajectory and second deduced trajectory pairs are deduced, a first deduced trajectory and second deduced trajectory pair with a lowest security strategy cost is used to determine the first game strategy.

In the foregoing technical solution, the strategy cost of the first deduced trajectory and second deduced trajectory pair may be evaluated, and a specific first deduced trajectory/second deduced trajectory pair to be used for trajectory planning of the first intelligent driving device is determined based on the strategy cost. This helps improve reasonableness of the planned motion trajectory of the first intelligent driving device. Further, the planned motion trajectory may be more accurately evaluated with reference to the driving scenario and a plurality of strategy cost evaluation dimensions.

With reference to the first aspect, in some implementations of the first aspect, the determining a first deduced trajectory of the first intelligent driving device based on a first sampling acceleration and the first motion parameter includes: determining the first deduced trajectory based on a lateral offset of the first intelligent driving device, the first sampling acceleration, and the first motion parameter, where the lateral offset is an offset perpendicular to a traveling direction of the first intelligent driving device.

In some possible implementations, a deduced sub-trajectory (or may be referred to as a longitudinal trajectory) of the first intelligent driving device is determined based on the first sampling acceleration and the first motion parameter, that is, the deduced sub-trajectory is a trajectory of the first intelligent driving device in a traveling direction parallel to the first intelligent driving device.

Further, the first deduced trajectory of the first intelligent driving device may be determined based on the deduced sub-trajectory and with reference to the lateral offset of the first intelligent driving device. The first deduced trajectory is a set including points whose coordinates of the first intelligent driving device change with time, namely, a result obtained through fusion of the longitudinal trajectory of the first intelligent driving device and the lateral offset of the first intelligent driving device.

It should be understood that, for the first object, the second deduced trajectory may also be determined based on the lateral offset of the first object, the second sampling acceleration, and the second motion parameter.

With reference to the first aspect, in some implementations of the first aspect, before the obtaining a predicted motion trajectory and a second motion parameter of a first object, the method further includes: determining that a distance between the first object and the first intelligent driving device is less than or equal to a first distance threshold and is greater than or equal to a second distance threshold.

For example, the first distance threshold may be 100 meters, or may be 200 meters, or may be another value.

For example, the second distance threshold may be determined based on screening of a closest in-path vehicle (closest in-path vehicle, CIPV). It should be understood that, if the second distance threshold is determined through screening of the CIPV, the second distance threshold may be different when the first object is located in different directions around the first intelligent driving device. In some possible implementations, the second distance threshold may also be another time distance and/or another space distance. For example, if the second distance is the time distance, the second distance threshold may be 2 seconds, 3 seconds, or another value; or if the second distance is the space distance, the second distance threshold may be 1.5 meters, 2 meters, or another value.

In some possible implementations, if there are two or more first objects whose distances to the first intelligent driving device are less than or equal to the first distance threshold, it needs to be determined that the distances between the two or more first objects and the first intelligent driving device are all greater than or equal to the second distance threshold. In other words, when a distance between any first object around the first intelligent driving device and the first intelligent driving device is less than the second distance threshold, autonomous driving decision-making and trajectory planning of the first intelligent driving device are not performed.

In the foregoing technical solution, a maximum distance between the first object and the first intelligent driving device is limited, so that the first object that is excessively far away from the first intelligent driving vehicle is removed, and a calculation amount in a trajectory planning process can be decreased. A minimum distance between the first object and the first intelligent driving device can be limited, to avoid a case that there is no sufficient space for decelerating to travel as the first object is excessively close to the first intelligent driving device. This helps improve safety of an autonomous driving process.

According to a second aspect, a motion trajectory planning method is provided, where the method may include: obtaining a planned traveling path and a first motion parameter of a first intelligent driving device; obtaining a predicted motion trajectory and a second motion parameter of a first object; when the planned traveling path overlaps the predicted motion trajectory, determining a planned motion trajectory of the first intelligent driving device based on the first motion parameter and the second motion parameter, where the planned motion trajectory indicates the first intelligent driving device to pass through a conflict area at a first preset velocity, or indicates the first intelligent driving device to travel at the first preset velocity when the first object passes through the conflict area, and the conflict area is an area in which the planned traveling path of the first intelligent driving device overlaps a deduced trajectory of the first object; and controlling the first intelligent driving device to travel based on the planned motion trajectory.

According to a third aspect, a motion trajectory planning method is provided, where the method includes: obtaining a planned traveling path and a first motion parameter of a first intelligent driving device; obtaining a predicted motion trajectory and a second motion parameter of a first object; and when the planned traveling path overlaps the predicted motion trajectory, determining a first game strategy based on the first motion parameter and the second motion parameter, where the first game strategy indicates the first intelligent driving device to grab a way of or yield to the first object at a first preset velocity; and determining a planned motion trajectory of the first intelligent driving device based on the first game strategy.

It should be noted that the first game strategy is used to decide that the first intelligent driving device grabs a way of or yields to the first object at a first preset velocity, so that it is expected that the first intelligent driving device passes through the conflict area at the first preset velocity, or that the first intelligent driving device travels at a first preset velocity when the first object passes through the conflict area. However, in a specific implementation process, a velocity of the first intelligent driving device when the first intelligent driving device passes through the conflict area may not necessarily reach the first preset velocity, or may be greater than the first preset velocity. The following specifically describes a scenario which possibly occurs in an actual traveling process of the first intelligent driving device with reference to two types of cases.

A case in which the first intelligent driving device pass through the conflict area earlier than the first object may be further detailed as follows:

1. The first intelligent driving device passes through the conflict area in a process of accelerating from a traveling velocity lower than the first preset velocity to the first preset velocity. Further, after the first intelligent driving device passes through the conflict area, interaction between the first intelligent driving device and the first object ends. Therefore, after the first intelligent driving device passes through the conflict area, it may be decided and planned that the first intelligent driving device continues to travel at a traveling velocity higher than the first preset velocity.

2. Before the first intelligent driving device reaches the conflict area, if the velocity has reached the first preset velocity (the first preset velocity may be decreased from a traveling velocity higher than the first preset velocity, or may be increased from a traveling velocity lower than the first preset velocity), the first intelligent driving device passes through the conflict area at the first preset velocity. Further, after the first intelligent driving device passes through the conflict area, interaction between the first intelligent driving device and the first object ends. Therefore, after the first intelligent driving device passes through the conflict area, it may be decided and planned that the first intelligent driving device continues to travel at a traveling velocity higher than the first preset velocity.

3. The first intelligent driving device passes through the conflict area in a process of decelerating from a traveling velocity higher than the first preset velocity to the first preset velocity. Further, after the first intelligent driving device passes through the conflict area, interaction between the first intelligent driving device and the first object ends. Therefore, after the first intelligent driving device passes through the conflict area, it may be decided and planned that the first intelligent driving device ends a deceleration state, and is controlled to continue to travel at a traveling velocity higher than the first preset velocity.

It may be understood that, in the foregoing first two cases, the first intelligent driving device grabs a way of the first object at a traveling velocity less than or equal to the first preset velocity. In a third case, the first intelligent driving device grabs a way of the first object at a traveling velocity higher than the first preset velocity.

A case in which the first intelligent driving device passes through the conflict area later than the first object may be further detailed as follows:

1. In a process in which the first intelligent driving device travels towards the conflict area, the first intelligent driving device is in a state of accelerating from a traveling velocity lower than the first preset velocity to the first preset velocity. In this case, the first object passes through the conflict area. Further, after the first object passes through the conflict area, interaction between the first intelligent driving device and the first object ends. Therefore, after it is determined that the first object passes through the conflict area, it may be decided and planned that the first intelligent driving device continues to travel at a traveling velocity higher than the first preset velocity.

2. In a process in which the first intelligent driving device travels towards the conflict area at the first preset velocity, the first object passes through the conflict area. Further, after the first object passes through the conflict area, interaction between the first intelligent driving device and the first object ends. Therefore, after it is determined that the first object passes through the conflict area, it may be decided and planned that the first intelligent driving device continues to travel at a traveling velocity higher than the first preset velocity.

3. In a process in which the first intelligent driving device travels towards the conflict area, the first intelligent driving device is in a state of decelerating from a traveling velocity higher than the first preset velocity to the first preset velocity. In this case, the first object passes through the conflict area. Further, after the first object passes through the conflict area, interaction between the first intelligent driving device and the first object ends. Therefore, after it is determined that the first object passes through the conflict area, it may be decided and planned that the first intelligent driving device continues to travel at a traveling velocity higher than the first preset velocity.

It may be understood that, in the foregoing first two cases, the first intelligent driving device yields to the first object at a traveling velocity less than or equal to the first preset velocity. In a third case, the first intelligent driving device yields to the first object at a traveling velocity higher than the first preset velocity.

In other words, regardless of whether the first intelligent driving device grabs a way of the first object at the first preset velocity or yields to the first object through decision-making based on the first game strategy, when the first intelligent driving device passes through the conflict area, the velocity of the first intelligent driving device may be the first preset velocity, or may be higher than or lower than the first preset velocity.

It should be noted that, after the foregoing "interaction between the first intelligent driving device and the first object ends", a motion behavior of the first object no longer affects decision-making and planning of a motion trajectory of the first intelligent driving device. It should be understood that, after the interaction between the first intelligent driving device and the first object ends, another object that is excessively close to the first intelligent driving device may appear. In this case, after passing through the conflict area, the first intelligent driving device may stop in a timely manner instead of continuing to travel at a traveling velocity higher than the first preset velocity.

According to a fourth aspect, a motion trajectory planning apparatus is provided. The apparatus may include: an obtaining unit, configured to: obtain a planned traveling path and a first motion parameter of a first intelligent driving device, and obtain a predicted motion trajectory and a second motion parameter of a first object; and a processing unit, configured to: when the planned traveling path overlaps the predicted motion trajectory, determine a planned motion trajectory of the first intelligent driving device based on the first motion parameter and the second motion parameter, where the planned motion trajectory includes a motion trajectory in which the first intelligent driving device grabs a way of or yields to the first object at a first preset velocity; and control the first intelligent driving device to travel based on the planned motion trajectory.

With reference to the fourth aspect, in some implementations of the fourth aspect, the processing unit is configured to: determine a first deduced trajectory of the first intelligent driving device based on a first sampling acceleration and the first motion parameter, where the first sampling acceleration is an acceleration that is determined in a sampling space and that may be reached by the first intelligent driving device; determine a second deduced trajectory of the first object based on a second sampling acceleration and the second motion parameter, where the second sampling acceleration is an acceleration that is determined in the sampling space and that may be reached by the first object; and when the first deduced trajectory and the second deduced trajectory indicate that the first intelligent driving device does not collide with the first object, or that the first object in a traveling direction of the first object collides with the first intelligent driving device in a direction that deviates away from a traveling direction of the first intelligent driving device, determine the planned motion trajectory based on the first deduced trajectory and the second deduced trajectory, where the first moment is a moment after a current moment.

With reference to the fourth aspect, in some implementations of the fourth aspect, the first motion parameter includes the velocity and/or the acceleration of the first intelligent driving device, and the processing unit is specifically configured to: determine a first deduced sub-trajectory based on the first sampling acceleration and the velocity and/or the acceleration of the first intelligent driving device, where a velocity of the first intelligent driving device at an end point of the first deduced sub-trajectory is the first preset velocity; and determine a second deduced sub-trajectory based on the first preset velocity, where the first deduced trajectory includes the first deduced sub-trajectory and the second deduced sub-trajectory.

With reference to the fourth aspect, in some implementations of the fourth aspect, the processing unit is specifically configured to: determine a first game strategy based on the first deduced trajectory and the second deduced trajectory, where the first game strategy indicates the first intelligent driving device to grab a way of or yield to the first object at the first preset velocity; and when first duration is greater than a first time threshold, determine the planned motion trajectory based on the first game strategy, the planned traveling path, and the second deduced trajectory.

With reference to the fourth aspect, in some implementations of the fourth aspect, the processing unit is specifically configured to: determine, based on the planned traveling path and the second deduced trajectory, a time period in which a first location space of the first object occupies a second location space of the first intelligent driving device; and determine the planned motion trajectory based on the first game strategy, the second location space, and the time period, where the planned motion trajectory includes a trajectory in which the first intelligent driving device travels at the first preset velocity in the second location space, or the planned motion trajectory includes a trajectory in which the first intelligent driving device travels at the first preset velocity in the time period.

With reference to the fourth aspect, in some implementations of the fourth aspect, the processing unit is specifically configured to: determine that a strategy cost of a deduced trajectory pair including the first deduced trajectory and the second deduced trajectory is the smallest.

With reference to the fourth aspect, in some implementations of the fourth aspect, the processing unit is specifically configured to: determine the first deduced trajectory based on a lateral offset of the first intelligent driving device, the first sampling acceleration, and the first motion parameter, where the lateral offset is an offset perpendicular to the traveling direction of the first intelligent driving device.

With reference to the fourth aspect, in some implementations of the fourth aspect, the processing unit is further configured to: determine that a distance between the first object and the first intelligent driving device is less than or equal to a first distance threshold and is greater than or equal to a second distance threshold.

According to a fifth aspect, a motion trajectory planning apparatus is provided. The apparatus may include: an obtaining unit, configured to: obtain a planned traveling path and a first motion parameter of a first intelligent driving device, and obtain a predicted motion trajectory and a second motion parameter of a first object; and a processing unit, configured to: when the planned traveling path overlaps the predicted motion trajectory, determine a planned motion trajectory of the first intelligent driving device based on the first motion parameter and the second motion parameter, where the planned motion trajectory indicates the first intelligent driving device to pass through a conflict area at a first preset velocity, or indicates the first intelligent driving device to travel at the first preset velocity when the first object passes through the conflict area, and the conflict area is an area in which the planned traveling path of the first intelligent driving device overlaps a deduced trajectory of the first object; and control the first intelligent driving device to travel based on the planned motion trajectory.

According to a sixth aspect, a motion trajectory planning apparatus is provided. The apparatus includes: an obtaining module, configured to: obtain a planned traveling path and a first motion parameter of a first intelligent driving device, and obtain a predicted motion trajectory and a second motion parameter of a first object; and a processing module, configured to: when the planned traveling path overlaps the predicted motion trajectory, determine a first game strategy based on the first motion parameter and the second motion parameter, where the first game strategy indicates the first intelligent driving device to grab a way of or yield to the first object at a first preset velocity; and determine a planned motion trajectory of the first intelligent driving device based on the first game strategy.

According to a seventh aspect, a motion trajectory planning apparatus is provided. The apparatus includes: a memory, configured to store a program; and a processor, configured to execute the program stored in the memory. When the program stored in the memory is executed, the processor is configured to perform the method according to any one of the possible implementations of the first aspect to the third aspect.

According to an eighth aspect, an intelligent driving device is provided. The intelligent driving device includes the apparatus according to any one of the possible implementations of the fourth aspect to the seventh aspect.

With reference to the eighth aspect, in some implementations of the eighth aspect, the intelligent driving device is a vehicle.

According to a ninth aspect, a computer program product is provided. The computer program product includes computer program code. When the computer program code is run on a computer, the computer is enabled to perform the method according to any one of the possible implementations of the first aspect to the third aspect.

It should be noted that all or a part of the computer program code may be stored in a first storage medium. The first storage medium may be encapsulated together with a processor, or may be encapsulated separately from a processor. This is not specifically limited in embodiments of this application.

According to a tenth aspect, a computer-readable medium is provided. The computer-readable medium stores program code, and when the computer program code is run on a computer, the computer is enabled to perform the method according to any one of the possible implementations of the first aspect to the third aspect.

According to an eleventh aspect, a chip is provided. The chip includes a processor, configured to invoke a computer program or computer instructions stored in a memory, so that the processor performs the method according to any one of the possible implementations of the first aspect to the third aspect.

With reference to the eleventh aspect, in a possible implementation, the processor is coupled to the memory through an interface.

With reference to the eleventh aspect, in a possible implementation, the chip system further includes the memory, and the memory stores a computer program or computer instructions.

**BRIEF DESCRIPTION OF DRAWINGS**

FIG. 1 is a schematic functional block diagram of an intelligent driving device according to an embodiment of this application;
FIG. 2 is a schematic diagram of sensing ranges of various sensors according to an embodiment of this application;
FIG. 3 is a schematic diagram of a system architecture required for implementing a motion trajectory planning method according to an embodiment of this application;
FIG. 4 is a schematic diagram of a system architecture required for implementing a motion trajectory planning method according to an embodiment of this application;
FIG. 5 is a schematic flowchart of a motion trajectory planning method according to an embodiment of this application;
FIG. 6(a), FIG. 6(b) and FIG.6(c) are a schematic diagram of an application scenario of a motion trajectory planning method according to an embodiment of this application;
FIG. 7 is a schematic diagram of a CIPV according to an embodiment of this application;
FIG. 8 is a schematic flowchart of a motion trajectory planning method according to an embodiment of this application;
FIG. 9 is a schematic diagram of a sampling space according to an embodiment of this application;
FIG. 10 is a schematic diagram of lateral path deduction according to an embodiment of this application;
FIG. 11 is a schematic diagram of longitudinal trajectory deduction according to an embodiment of this application;
FIG. 12 is a schematic diagram of a vehicle side according to an embodiment of this application;
FIG. 13 is a schematic diagram of an application scenario of a game strategy according to an embodiment of this application;
FIG. 14(a), FIG. 14(b), FIG. 14(c), and FIG. 14(d) are a schematic flowchart of game strategy stabilization processing according to an embodiment of this application;
FIG. 15 is a schematic diagram of motion trajectories of an ego vehicle and a game object according to an embodiment of this application;
FIG. 16 is a schematic diagram of a constraint of a creep-forward-yield object according to an embodiment of this application;
FIG. 17 is a schematic diagram of a constraint of a creep-forward-grabway object according to an embodiment of this application;
FIG. 18 is a schematic flowchart of a motion trajectory planning method according to an embodiment of this application;
FIG. 19 is a schematic block diagram of a motion trajectory planning apparatus according to an embodiment of this application; and
FIG. 20 is a schematic block diagram of a motion trajectory planning apparatus according to an embodiment of this application.

**DESCRIPTION OF EMBODIMENTS**

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.
In embodiments of this application, prefix words such as "first" and "second" are used only to distinguish between different described objects, and do not limit a location, a sequence, a priority, a quantity, content, or the like of the described objects. In embodiments of this application, use of a prefix word like an ordinal number for distinguishing between described objects does not constitute a limitation on the described objects. For description of the described objects, refer to the description of the context in the claims or the embodiments. The use of such a prefix word should not constitute an unnecessary limitation. In addition, in the descriptions of this embodiment, unless otherwise specified, "at least one" means one or more, and "a plurality of" means two or more. The character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

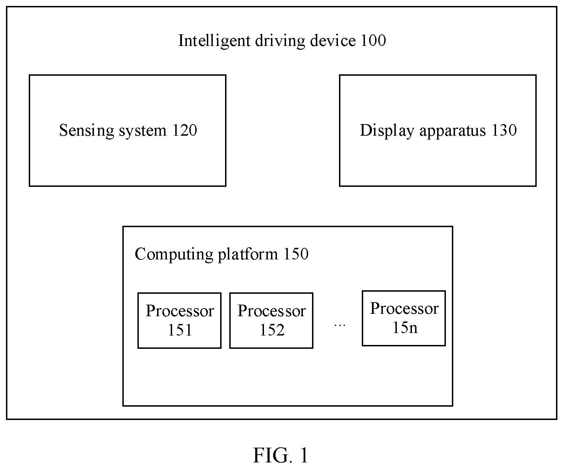

FIG. 1 is a schematic functional block diagram of an intelligent driving device 100 according to an embodiment of this application. The intelligent driving device 100 may include a sensing system 120, a display apparatus 130, and a computing platform 150. The sensing system 120 may include several sensors that sense information about an environment around the intelligent driving device 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, or a camera apparatus.

Some or all functions of the intelligent driving device 100 may be controlled by the computing platform 150. The computing platform 150 may include processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions, and some or all of the processors 151 to 15n may invoke the instructions in the memory to execute the instructions, to implement a corresponding function.

The intelligent driving device 100 may include an advanced driving assistant system (advanced driving assistant system, ADAS). The ADAS obtains information around the intelligent driving device by using a plurality of sensors (including but not limited to a lidar, a millimeter-wave radar, a camera apparatus, an ultrasonic sensor, a global positioning system, and an inertial measurement unit) in the sensing system 120, and analyzes and processes the obtained information, to implement functions such as obstacle sensing, target recognition, intelligent driving device positioning, path planning, and driver monitoring/reminding. In this way, driving safety, automation, and comfort of the intelligent driving device are improved.

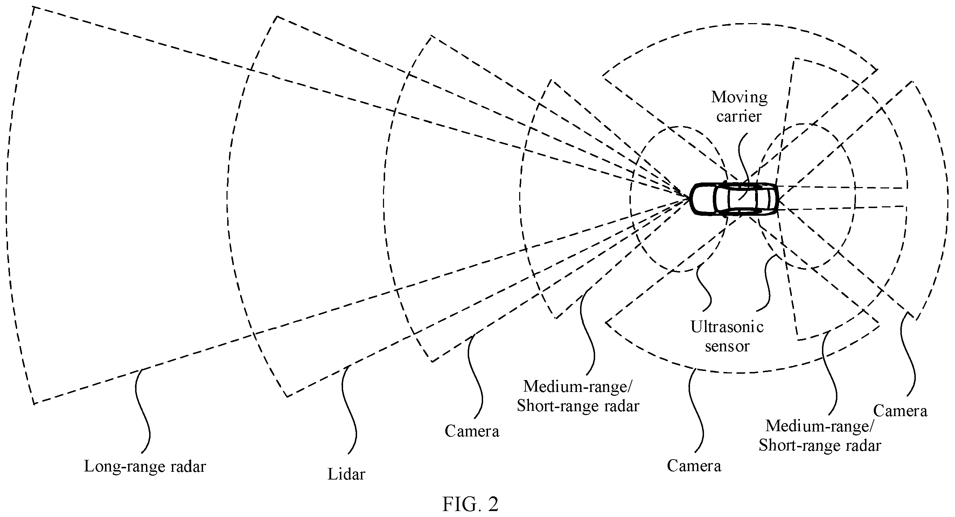

FIG. 2 is a schematic diagram of sensing ranges of various sensors. The sensors may include, for example, the lidar, the millimeter-wave radar, the camera apparatus, and the ultrasonic sensor in the sensing system 120 shown in FIG. 1. The millimeter-wave radar may be classified into a long-range radar and a medium-range/short-range radar. Currently, a sensing range of the lidar is about 80 to 150 meters, a sensing range of the long-range millimeter-wave radar is about 1 to 250 meters, a sensing range of the medium-range/short-range millimeter-wave radar is about 30 to 120 meters, a sensing range of a camera is about 50 to 200 meters, and a sensing range of an ultrasonic radar is about 0 to 5 meters.

At different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). The L0 level indicates no automation, the L1 level indicates driving support, the L2 level indicates partial automation, the L3 level indicates conditional automation, the L4 level indicates high automation, and the L5 level indicates full automation. Tasks of monitoring and responding to road conditions at the L1 to L3 levels are completed by a driver and a system, and the driver needs to take over a dynamic driving task. The L4 and L5 levels may enable the driver to be completely changed to a passenger. Currently, functions that can be implemented by the ADAS mainly include but are not limited to: adaptive cruise, autonomous emergency braking, automatic parking, blind spot monitoring, traffic warning/braking at an intersection ahead, traffic warning/braking at an intersection behind, front vehicle collision warning, lane deduction warning, lane keeping assistance, rear vehicle anti-collision warning, traffic sign identification, traffic congestion assistance, highway assistance, and the like. It should be understood that the foregoing functions may have specific modes at the different autonomous driving levels (L0 to L5). A higher autonomous driving level indicates a more intelligent mode.

As described above, in a current technical background, a method for planning an autonomous driving trajectory is usually based on an FSM and game-based object decision-making and planning. The decision-making and planning is greatly affected by trajectory prediction precision of a game object. For example, when the game object is a pedestrian or a non-motor vehicle, a motion direction is unclear because of a large degree of freedom of motion of the target, and consequently, a trajectory prediction result fluctuates greatly. In this case, a predicted motion trajectory of the game object frequently intrudes a driving road of an autonomous vehicle. Improper trajectory prediction of the game object may cause problems such as unexpected and frequent light and heavy braking, mistaken stopping, and continuous yielding of the autonomous vehicle, or causes the game object and the autonomous vehicle to simultaneously stop and/or start. A typical scenario is a road on which both a motor vehicle and a non-motor vehicle travel or an intersection without an indicator. This leads to low passing efficiency of the autonomous vehicle and poor ride experience of a user. In view of this, embodiments of this application provide a motion trajectory planning method and apparatus, and an intelligent driving device, so that trajectory planning of a vehicle may be performed based on a semantic-level decision-making tag of a game strategy and a deduced trajectory of a game object. On the premise of ensuring safety and complying with traffic regulations, the vehicle actively keeps low-velocity creep in an autonomous driving process to probe a behavior of the game object. When the vehicle keeps a low-velocity creep state, the vehicle is in a low-velocity state and is not prone to impact of trajectory prediction precision of the game object, so that problems such as frequent mistaken braking, light braking, heavy braking, and mistaken stopping can be avoided. This helps improve rider experience of a user.

It should be noted that the non-motor vehicle in this application is a means of transportation that is driven by manpower or animal power and that travels on a road, and a means of transportation like a motor wheelchair for the disabled or an electric bicycle that is driven by a power apparatus but is designed with a highest velocity, curb mass, and a dimension that meet related national standards. The motor vehicle is a means of transportation that is driven or drawn by a power apparatus thereof.

It should be understood that "creep" in embodiments of this application is a state of traveling at a velocity lower than or equal to a specific velocity. For example, the "velocity" may be 10 km/h, or may be 5 km/h, or may be another value. It should be understood that, when an ego vehicle is in the creep state, a planned motion trajectory of the ego vehicle is not prone to impact of the trajectory prediction precision of the game object.

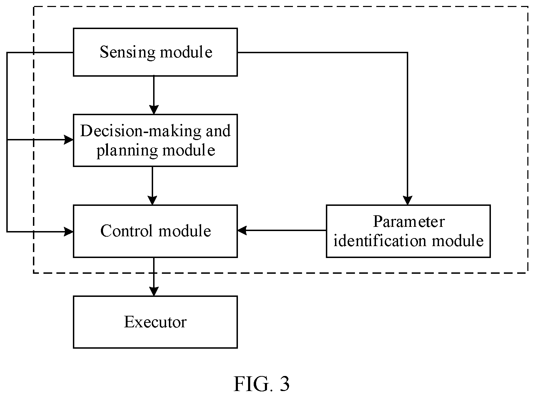

FIG. 3 is an architectural diagram of a trajectory planning system according to an embodiment of this application. As shown in FIG. 3, the trajectory planning system includes a sensing module, a decision-making and planning module, a control module, a parameter identification module, and an executor. The sensing module may include one or more camera apparatuses or one or more radar sensors in the sensing system 120 shown in FIG. 1, and is configured to collect ambient environment information of an intelligent driving device, a real-time motion parameter of the intelligent driving device, and the like. The sensing module may further process the collected ambient environment information, and establish a world model including a road, an obstacle, and the like for downstream modules (namely, the decision-making and planning module and the control module). The decision-making and planning module and the control module may be one or more processors in the computing platform 150 shown in FIG. 1. Specifically, the decision-making and planning module is configured to: determine a game strategy of the intelligent driving device based on the ambient environment information, generate a deduced trajectory of a game object, and determine a planned motion trajectory based on the game strategy and the deduced trajectory of the game object. The control module is configured to: calculate a corresponding control quantity based on the planned motion trajectory, and output the control quantity to the executor. When the executor executes control based on the control quantity, the intelligent driving device is controlled to travel based on the planned motion trajectory. In some possible implementations, the executor may also include a steering and braking control system in the intelligent driving device 100.

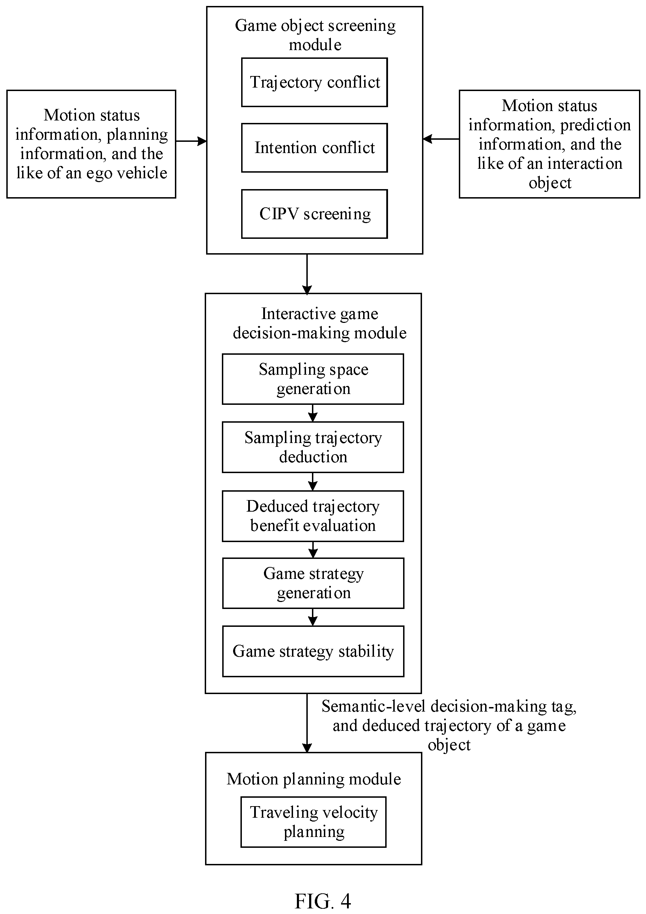

As shown in FIG. 4, the decision-making and planning module may include a game object screening module, an interactive game decision-making module, and a motion planning module. The game object screening module is configured to perform game object screening. The interactive game decision-making module is configured to: deduce a deduced trajectory of the game object and a deduced trajectory of an ego vehicle based on the screened game object, and generate a game strategy (or referred to as a semantic-level decision-making tag) based on the deduced trajectory of the game object and the deduced trajectory of the ego vehicle. The motion planning module is configured to plan a motion trajectory of the ego vehicle based on the game strategy and the deduced trajectory of the game object, to generate a planned motion trajectory.

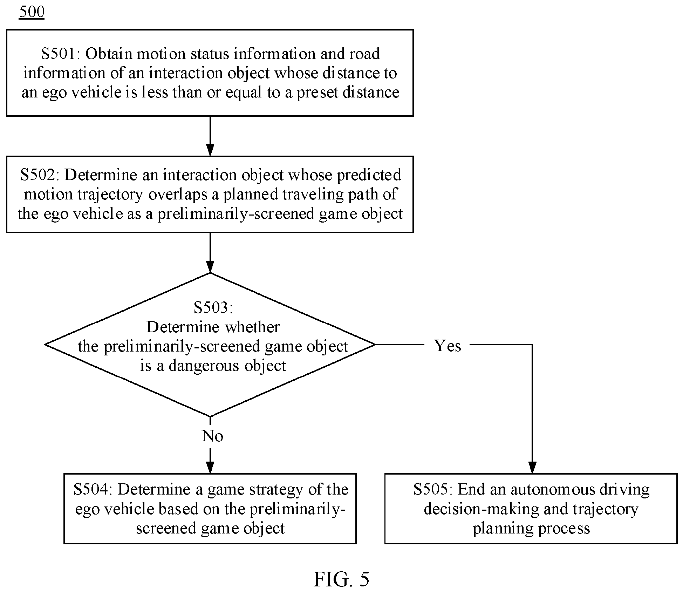

The following describes detailed working processes of the foregoing three modules with reference to FIG. 5 to FIG. 17.

FIG. 5 is a schematic flowchart of a motion trajectory planning method 500 according to an embodiment of this application. The method 500 may be applied to the intelligent driving device shown in FIG. 1, or may be performed by the system shown in FIG. 3 or FIG. 4. For example, the method 500 may be performed by the game object screening module in FIG. 4. The following describes the method 500 by using an example in which the intelligent driving device is a vehicle. It should be understood that steps or operations of the motion trajectory planning method shown in FIG. 5 are merely examples for description. In this embodiment of this application, other operations or variations of the operations in FIG. 5 may be further performed. The method 500 includes the following steps.

S501: Obtain motion status information and road information of an interaction object whose distance to the ego vehicle is less than or equal to a preset distance.

For example, the interaction object includes but is not limited to an intelligent driving device, a pedestrian, an electric vehicle, a bicycle, and another object.

For example, the preset distance may be 100 meters (meters, m), or may be 200 m, or may be another distance.

For example, the motion status information of the interaction object may include but is not limited to a predicted motion trajectory and a second motion parameter like location information, a velocity, and an acceleration of the interaction object. For example, the motion status information of the interaction object may be calculated by the ego vehicle based on the location information and/or velocity information that is of the interaction object and that is measured by using a radar sensor or the like. Alternatively, the motion status information of the interaction object may be received by using vehicle to infrastructure (vehicle to infrastructure, V2I) communication, or information exchange of vehicle to everything (vehicle to everything, V2X), or may be received by using vehicle to vehicle (vehicle to vehicle, V2V) communication, or may be received in another manner.

For example, the ego vehicle may directly receive the predicted motion trajectory of the interaction object by using V2I, V2V, or V2X. For another example, the predicted motion trajectory of the interaction object may be calculated by the ego vehicle based on received location information, navigation angle information, and the like of the interaction object. The location information, the navigation angle information, and the like may be included in basic vehicle safety message (basic vehicle safety message, BSM) information, or may be included in other information.

It should be understood that the predicted motion trajectory of the interaction object may be understood as a predicted motion trajectory of the interaction object in a future period of time. For example, the "future period of time" may be 10 seconds, or may be 20 seconds.

For example, the road information includes but is not limited to lane line information of a current road, a guiding rule of one or more lanes of the current road, and the like. The road information may be received by the ego vehicle by using V2I, V2V, or V2X, or may be obtained by the ego vehicle through collection and calculation by using a radar sensor and/or a camera apparatus.

S502: Determine an interaction object whose predicted motion trajectory overlaps a planned traveling path of the ego vehicle as a preliminarily-screened game object.

For example, the planned traveling path may be obtained by using a planning and control module of the ego vehicle.

In some possible implementations, a motion status of the interaction object may be determined based on the predicted motion trajectory of the interaction object, and further, the preliminarily-screened game object is determined with reference to the motion status of the interaction object. For example, when the interaction object travels along the predicted motion trajectory, it is considered that the motion status of the interaction object is clear. In this case, when the predicted motion trajectory of the interaction object overlaps the planned traveling path of the ego vehicle, it is considered that the interaction object is the preliminarily-screened game object.

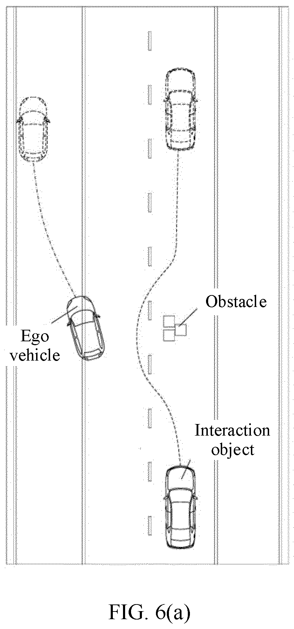

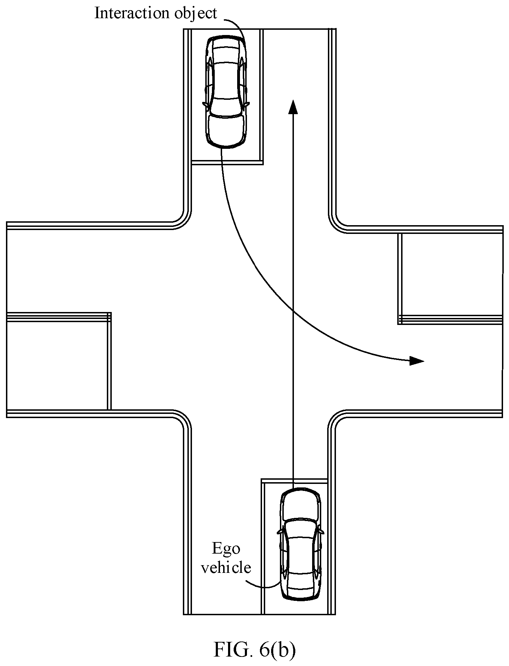

For example, as shown in FIG. 6(a), the ego vehicle goes straight, and the interaction object is interfered by an obstacle and needs to occupy a driving lane of the ego vehicle, or the interaction object enters from a right side of the ego vehicle. In this case, when it may be determined that the predicted motion trajectory of the interaction object overlaps the planned traveling path of the ego vehicle, the interaction object is determined as the preliminarily-screened game object. Alternatively, as shown in FIG. 6(b), the ego vehicle goes straight at an intersection without an indicator, and the interaction object turns left on an opposite lane of the intersection, or the ego vehicle turns left at an intersection without an indicator, and the interaction object goes straight on an opposite lane of the intersection, and the like. In this case, when it may be considered that the predicted motion trajectory of the interaction object overlaps the planned traveling path of the ego vehicle, the interaction object may be determined as the preliminarily-screened game object.

For another example, an actual motion trajectory of the interaction object is different from the predicted motion trajectory. In this case, it is considered that the motion status of the interaction object is unclear. Further, a new predicted motion trajectory of the interaction object may be determined based on driving intention of the interaction object, to determine whether the new predicted motion trajectory overlaps the planned traveling path of the ego vehicle.

For example, the driving intention of the interaction object may be determined based on a semantic intention-based behavior prediction method. Further, when it is determined that the driving intention of the interaction object overlaps the motion trajectory of the ego vehicle, it is determined that the interaction object is the preliminarily-screened game object.

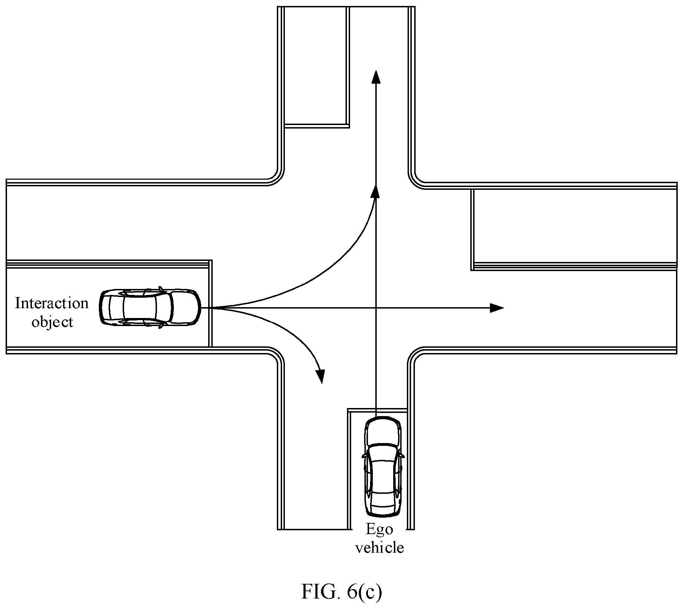

For example, as shown in FIG. 6(c), when the ego vehicle goes straight at an intersection without an indicator, the interaction object may go straight or may turn left or turn right on a left side of the ego vehicle. In this case, the driving intention of the interaction object may be determined based on a turn light state of the interaction object. Further, when the interaction object goes straight or turns left, the driving intention of the interaction object overlaps the planned traveling path of the ego vehicle. In this case, it may be determined that the interaction object is the preliminarily-screened game object.

S503: Determine whether the preliminarily-screened game object is a dangerous object.

Specifically, if the preliminarily-screened game object is not a dangerous object, S504 is performed, to determine a game strategy of the ego vehicle based on the preliminarily-screened game object, that is, for the preliminarily-screened game object, autonomous driving game decision-making and trajectory planning are performed. If the preliminarily-screened game object is a dangerous object, S505 is performed, to end the autonomous driving decision-making and trajectory planning process.

It should be noted that the foregoing "end the autonomous driving decision-making and trajectory planning process" means that the trajectory planning process provided in this embodiment of this application is not performed. It should be understood that, in a specific implementation process, the ego vehicle may perform other driving decision-making and trajectory planning.

It should be further noted that the "dangerous object" in embodiments of this application is an interaction object that is excessively close to the ego vehicle in space and/or time, and for which trajectory planning including a creep strategy in embodiments of this application is not suitable. It should be understood that other autonomous driving decision-making and/or trajectory planning may be performed for the dangerous object, for example, autonomous emergency braking is performed.

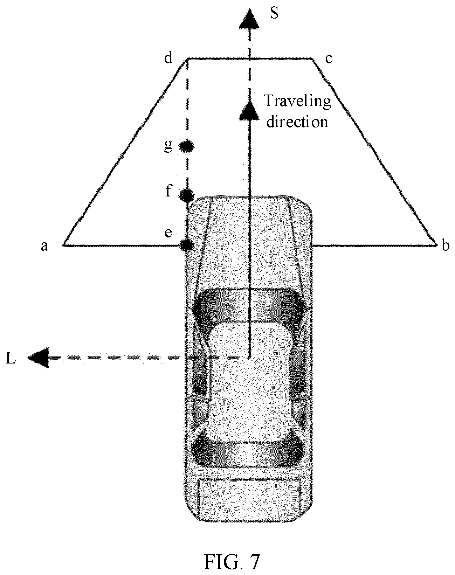

For example, CIPV screening may be performed on the preliminarily-screened game object, to determine whether the preliminarily-screened game object is a dangerous object. A schematic diagram of CIPV screening is shown in FIG. 7. For safety consideration, an area (for example, an isosceles trapezoid shaped area or a vase shaped area) that changes with a velocity and is symmetrical with respect to a longitudinal symmetric plane of the ego vehicle is provided in front of the traveling direction of the ego vehicle, to screen a dangerous object. As shown in FIG. 7, a length, in a longitudinal direction, namely, a direction (a direction S in FIG. 7) parallel to the traveling direction of the ego vehicle, of a CIPV screening area includes three parts: ef, fg, and gd, where ef is a constant threshold, and represents that a specific longitudinal range in a direction from a head of the ego vehicle to a tail of the ego vehicle is also a dangerous object screening area; fg is a constant-velocity traveling threshold of the ego vehicle, and represents a distance that the ego vehicle travels at a current vehicle velocity within reaction time from time when a driver receives an emergency stop signal to time when the driver brakes the intelligent driving device; and gd is a braking distance threshold of the ego vehicle, and represents a distance required by the ego vehicle to brake at a maximum deceleration in a current working condition. A formula of the longitudinal length of the CIPV screening area is expressed as follows:

$$\begin{cases} L_{ef} \;=\; longitude\_const\_thresh \\ L_{fg} \;=\; v_{ego\_current} \; * \; t_{reaction} \\ \qquad L_{gd} \;=\; \dfrac{v_{ego\_current}^{2}}{2 * a_{max}} \end{cases}.$$

Herein, $L_{ef}$ represents a length of the ef segment, and longitude_*const_thresh* represents a longitude constant threshold; $L_{fg}$ represents a length of the fg segment, $v_{ego_{current}}$ represents a velocity of the ego vehicle at a current moment, and $t_{reaction}$ represents the reaction time from the time when the driver receives an emergency stop signal to the time when the driver brakes the intelligent driving device; and $L_{gd}$ represents a length of the gd segment, and $a_{max}$ represents a maximum acceleration when the ego vehicle decelerates in the current working condition.

A range of a lateral direction, namely, a direction (an L direction in FIG. 7) perpendicular to the longitudinal symmetric plane of the ego vehicle, of the CIPV screening area is determined by lengths of ab and dc. Both ab and dc are lateral constant thresholds, and the length of ab may be greater than that of dc. A lateral length of the CIPV screening area is from ab to dc in the longitudinal direction, and the lateral length may be linearly or nonlinearly reduced in the longitudinal direction. FIG. 7 shows a schematic diagram of the CIPV screening area, where the lateral length is linearly reduced.

In some possible implementations, a shape of the CIPV screening area may be dynamically changed by adjusting the longitude constant threshold (for example, ef), the lateral constant threshold (for example, ab and dc), a lateral length reduction change degree, a velocity of the ego vehicle, an acceleration of the ego vehicle, driver reaction time, and the like, to adapt to a vehicle model of the preliminarily-screened game object and radical degree tendency of the ego vehicle. For example, a larger vehicle model of the preliminarily-screened game object indicates a greater length of ed, and/or a greater length of ab and/or cd; or a higher radical degree of the ego vehicle indicates a smaller length of ed, and/or a smaller length of ab and/or cd.

Further, duration ttl of a trajectory conflict or an intention conflict between the preliminarily-screened game object and the ego vehicle in the lateral direction, namely, in a direction perpendicular to a longitudinal symmetric plane of the intelligent driving device, is calculated based on the CIPV screening area. A calculation formula is as follows:

$$ttl \;=\; \frac{L_{obj\_l}}{V_{obj\_l}}.$$

Herein, $L_{obj\_l}$ represents a distance between the preliminarily-screened game object and the ego vehicle in the lateral direction; and $V_{obj\_l}$ represents a velocity of the preliminarily-screened game object in the lateral direction.

Further, a velocity difference $\Delta V$ between the preliminarily-screened game object and the ego vehicle in the longitudinal direction, namely, a direction parallel to the traveling direction of the intelligent driving device, is calculated. A calculation formula is as follows:

$$\Delta V = V_{obj\_s} - V_{ego\_s}.$$

Herein, $V_{obj\_s}$ represents a longitudinal velocity of the preliminarily-screened game object, and $V_{ego\_s}$ represents a longitudinal velocity of the ego vehicle. The following conditions need to be met when the preliminarily-screened game object is determined as a dangerous object: (a) The preliminarily-screened game object is in the CIPV screening area; (b) ttl of the preliminarily-screened game object is less than or equal to a first preset threshold ttl_thresh; and (c) ΔV of the game object is less than or equal to a second preset threshold ΔV_thresh. The first preset threshold ttl_thresh is determined based on a longitudinal location and the vehicle model of the preliminarily-screened game object, and the radical degree of the ego vehicle, and may be dynamically adjusted based on one or more pieces of the foregoing information. The second preset threshold ΔV_thresh is determined based on the vehicle model of the preliminarily-screened game object and the radical degree of the ego vehicle, and may be dynamically adjusted based on the vehicle model of the preliminarily-screened game object and/or the radical degree of the ego vehicle.

It should be understood that, if the preliminarily-screened game object is determined as a "dangerous object", trajectory planning based on the creep strategy in this application is not performed on the "dangerous object" subsequently, but an operation like autonomous emergency braking (autonomous emergency braking, AEB) is performed. If the preliminarily-screened game object is determined as not a "dangerous object", trajectory planning based on the creep strategy in this application is continued on the preliminarily-screened game object.

S504: Determine the game strategy of the ego vehicle based on the preliminarily-screened game object.

It should be noted that the preliminarily-screened game object in this step is a "game object" that needs to be considered when trajectory planning is performed on the ego vehicle based on the creep strategy in a subsequent embodiment (for example, the method 800).

S505: End the autonomous driving decision-making and trajectory planning process.

According to the motion trajectory planning method provided in this embodiment of this application, a game object that needs to be considered when trajectory planning is performed on the ego vehicle based on the creep strategy can be preliminarily screened based on the trajectory conflict, the intention conflict, and the CIPV method, so that game strategy decision-making and trajectory planning can be performed in a relatively safe environment, and driving safety can be improved.

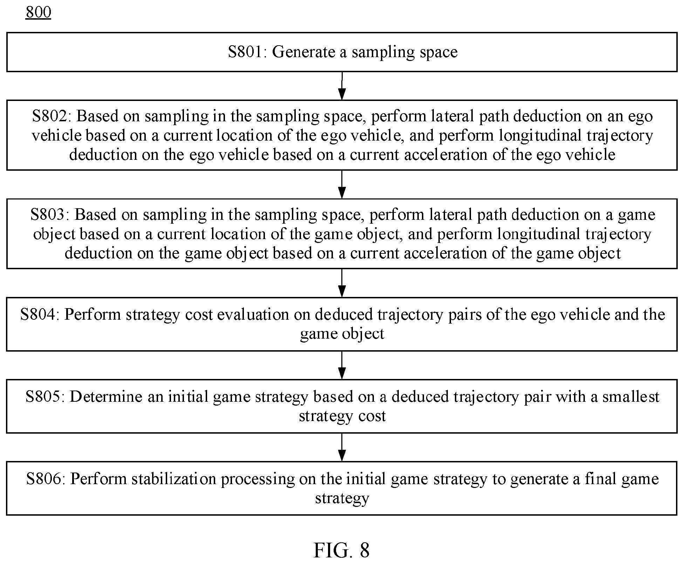

FIG. 8 is a schematic flowchart of a motion trajectory planning method 800 according to an embodiment of this application. The method 800 may be applied to the intelligent driving device shown in FIG. 1, or may be performed by the system shown in FIG. 3 or FIG. 4. For example, the method 800 may be performed by the interactive game decision-making module in FIG. 4. In some possible implementations, the method 800 may be performed after the method 500. For example, the method 800 may be considered as an extension of S504. It should be understood that steps or operations of the motion trajectory planning method shown in FIG. 8 are merely examples for description. In this embodiment of this application, other operations or variations of the operations in FIG. 8 may be further performed. The method 800 includes the following steps:

S801: Generate a sampling space.

In this embodiment of this application, the sampling space is a space used to describe a possibility status of an ego vehicle and/or a game object. The possibility status includes but is not limited to a kinematic status like a velocity, an acceleration, or an acceleration change rate. The possibility status may also include another kinematic status of the ego vehicle and/or the game object. It should be understood that the possibility status space has an upper limit of a status value and a lower limit of the status value. The upper limit of the status value is a maximum value of a status that may be reached by a vehicle, for example, a maximum acceleration, a maximum velocity, and a maximum acceleration change rate that may be reached by the ego vehicle and/or the game object. The lower limit of the status value is a minimum value of a status that may be reached by the ego vehicle and/or the game object, for example, a minimum acceleration, a minimum velocity, and a minimum acceleration change rate that may be reached by the vehicle. When trajectory deduction is performed on the ego vehicle and the game object, trajectories of the ego vehicle and the game object are deduced based on the possibility statuses that are of the ego vehicle and the game object and that are collected in the sampling space. In this application, an example in which the possibility status in the sampling space is the acceleration is used for description.

For example, a longitudinal acceleration sampling space is generated based on motion status information of the ego vehicle and the game object by considering longitudinal feature information like road velocity limit, the acceleration change rate (a Jerk value), and a game object type. A lateral offset sampling space is generated based on feature information like a road boundary, a static obstacle, and kinematics of the intelligent driving device.

It should be noted that in embodiments of this application, a "longitudinal direction" may be understood as a direction parallel to a longitudinal symmetric plane of the intelligent driving device in a plane parallel to the ground, namely, a traveling direction of the intelligent driving device. In embodiments of this application, a "lateral direction" may be understood as a direction perpendicular to the longitudinal symmetric plane of the intelligent driving device, namely, a direction perpendicular to the traveling direction of the intelligent driving device in the plane parallel to the ground.

For example, the game object may be understood as the preliminary-screened game object that is not a dangerous object in the foregoing embodiment, or may be a game object that is screened in another manner.

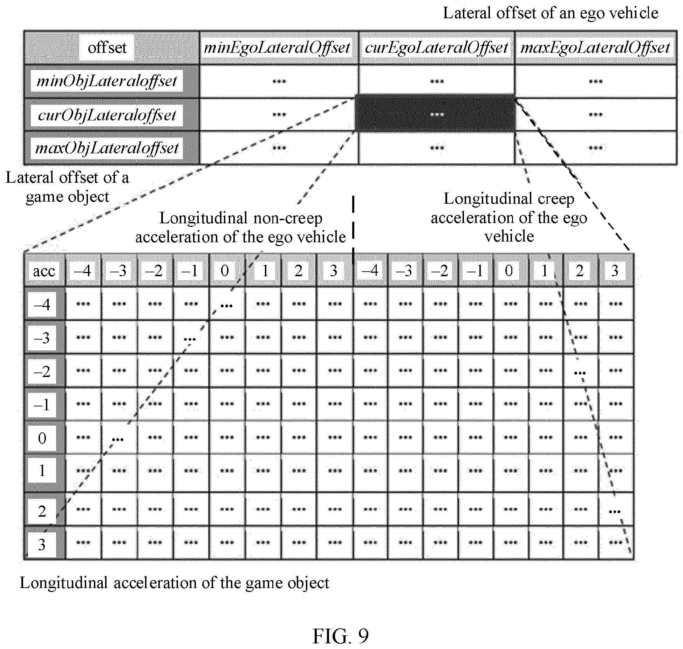

In some possible implementations, a minimum lateral offset, a current lateral offset, and a maximum lateral offset are respectively selected for the game object and the ego vehicle, to obtain 3*3 = 9 lateral offset sampling spaces. Sampling in the lateral offset sampling space indicates an offset of the trajectory of the ego vehicle or the game object in the direction perpendicular to the longitudinal symmetric plane of the intelligent driving device. Sampling in a plurality of longitudinal sampling spaces may be performed in each lateral offset sampling space. For example, the longitudinal sampling space of the ego vehicle may be divided into a longitudinal creep acceleration sampling space and a longitudinal non-creep acceleration sampling space of the ego vehicle. Sampling regions and sampling intervals of the two may be the same. A difference lies in that during trajectory deduction, upper-bound velocities and lower-bound velocities of trajectory deduction based on the longitudinal non-creep acceleration and the longitudinal creep acceleration of the ego vehicle are different. In a specific implementation process, sampling in the longitudinal creep acceleration sampling space and sampling in the longitudinal non-creep acceleration sampling space may be distinguished by using a "tag" or the like. The longitudinal acceleration sampling space of the game object includes a longitudinal non-creep acceleration sampling space. The lateral and longitudinal sampling spaces of the ego vehicle and the lateral and longitudinal sampling spaces of the game object are cross-combined to form a final sampling space, as shown in FIG. 9. Specifically, the lateral offset sampling regions of the ego vehicle and the game object shown in FIG. 9 are [ *minEgoLateraloffset, maxEgoLateraloffset* ] and [ *minObjLateraloffset, maxObjLateraloffset* ] respectively. In FIG. 9, regions of the longitudinal non-creep acceleration sampling space and the longitudinal creep acceleration sampling space of the ego vehicle are both [-4, 3] m/$s^2$, the region of the longitudinal acceleration sampling space of the game object is [-4, 3] m/$s^2$, and a sampling interval of the longitudinal acceleration sampling space is set to 1 m/$s^2$, so that 16 * 8 = 128 longitudinal sampling spaces may be obtained. The sampling space formed by the ego vehicle and the game object may include 9 * 128 = 1152 sampling spaces. It should be understood that a specific sampling interval of the lateral and longitudinal sampling spaces may be another interval, and may be determined based on hardware calculation performance and a precision requirement. For example, the longitudinal sampling interval may be 2 m/$s^2$, or may be 0.5 m/$s^2$. For another example, the lateral sampling interval may be further divided into 5 * 5 = 25 lateral offset sampling spaces.

S802: Based on sampling in the sampling space, perform lateral path deduction on the ego vehicle based on a current location of the ego vehicle, and perform longitudinal trajectory deduction on the ego vehicle based on a current acceleration of the ego vehicle.

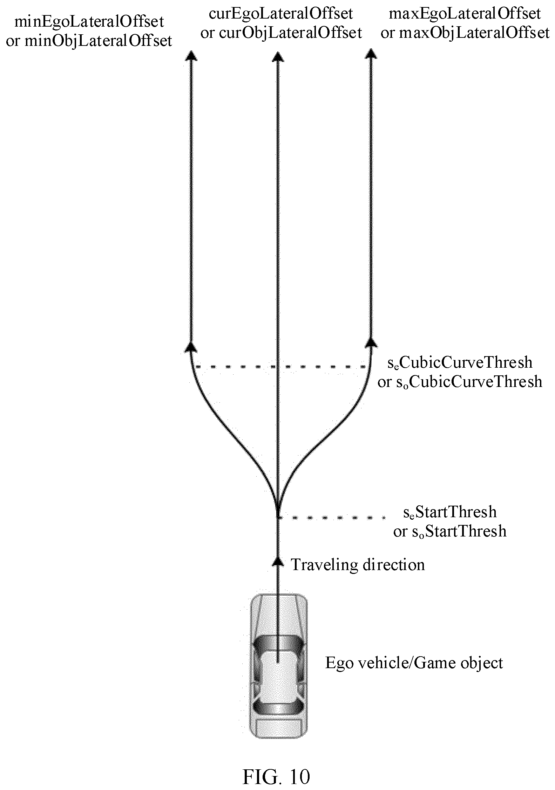

In some possible implementations, the lateral path and the longitudinal trajectory of the ego vehicle are separately deduced based on sampling in the sampling space. The lateral path includes an offset path curve shape, as shown in FIG. 10. The longitudinal trajectory includes a relationship between longitudinal distances (s) at a corresponding moment (t). Finally, a plurality of groups of deduced trajectories with time information are generated based on the lateral path and the longitudinal trajectory.

For example, based on SL coordinates shown in FIG. 7, the lateral path of the ego vehicle is deduced by using the following formula:

$$l(s_e) =$$

$$\begin{cases} curEgoLateralOffset & s_e \leq s_e StartThresh \\ as_e^3 + bs_e^2 + cs_e + d & s_e StartThresh < s_e \leq s_e CubicCurveThresh. \\ egolateralOffset & s_e > s_e CubicCurveThresh \end{cases}$$

Herein, $s_e$ is a longitudinal location (unit: m) of the ego vehicle at a moment at which the lateral path of the ego vehicle is deduced, and the location changes with the deduction moment. $l(s_e)$ is a lateral offset (unit: m) corresponding to the longitudinal location $s_e$ of the ego vehicle; $s_e StartThresh$ is a longitudinal start location (unit: m) of the ego vehicle, where the longitudinal start location of the ego vehicle may be understood as a location of the ego vehicle in the direction parallel to the longitudinal symmetric plane of the intelligent driving device at a moment when trajectory deduction starts; *curEgoLateralOffset* is an offset (unit: m) corresponding to a current direction of the ego vehicle; $s_e CubicCurveThresh$ is a longitudinal location (unit: m) at which a cubic curve connection ends; *egolateralOffset* is the lateral offset (unit: m) when the cubic curve connection of the ego vehicle ends, and corresponds to min*EgoLateralOffset* or max*EgoLateralOffset* of the ego vehicle; and $s_e StartThresh$ and $s_e CubicCurveThresh$ may be dynamically adjusted based on a vehicle model and a radical degree of the ego vehicle. For example, when the vehicle model of the ego vehicle is a large vehicle, a value of $s_e StartThresh$ and/or $s_e CubicCurveThresh$ is large; and/or when the radical degree of the ego vehicle is high, a value of $s_e StartThresh$ and/or $s_e CubicCurveThresh$ is small. A path is connected from ($s_e StartThresh, curEgoLateralOffset)$ to

(*s$_e$CubicCurveThresh, egolateralOffset*) by using a cubic curve, and tangent directions of the cubic curve at (*s$_e$Start-Thresh, curEgoLateralOffset*) and (*s$_e$CubicCurveThresh, egolateralOffset*) are parallel to the traveling direction of the intelligent driving device, where *a, b, c* and *d* are coefficients of a cubic polynomial, and specific values of *a, b, c* and *d* may be determined based on the vehicle model and the radical degree of the ego vehicle. The specific values of *a,b, c, and d* are not limited in this application.

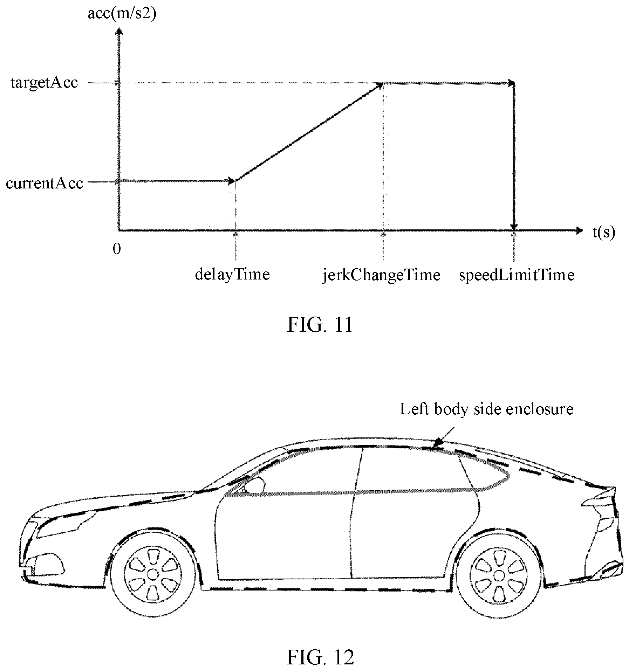

In a process of deducing the longitudinal trajectory of the ego vehicle, a longitudinal acceleration of the ego vehicle varies with deduction time, as shown in FIG. 11, where a horizontal axis represents a deduction moment t, and a vertical axis represents an acceleration of the ego vehicle. For example, a longitudinal location of the ego vehicle at a moment in the trajectory deduction process may be determined based on a deduced longitudinal acceleration of the ego vehicle and a velocity of the ego vehicle, and longitudinal locations of the ego vehicle at a plurality of moments in the trajectory deduction process form the longitudinal trajectory of the ego vehicle. As shown in FIG. 11, longitudinal acceleration deduction of the ego vehicle may include the following four phases: (1) a delay phase (t∈ [0, delayTime)): Longitudinal trajectory deduction is performed based on a current acceleration currentAcc of the ego vehicle; (2) a constant acceleration change rate phase (t ∈ [delayTime, jerkChangeTime), hereinafter referred to as a constant Jerk phase): An acceleration change rate is determined based on an acceleration at which the constant Jerk phase starts and a longitudinal sampling acceleration targetAcc, and longitudinal trajectory deduction is performed based on constant Jerk; (3) a constant acceleration phase (t ∈ [jerkChangeTime, speedLimitTime) ): The longitudinal sampling acceleration targetAcc is maintained for trajectory deduction; and (4) a constant velocity phase (t ≥ speedLimitTime): When a deduced velocity reaches an upper-bound velocity or a lower-bound velocity, the upper-bound velocity or the lower-bound velocity is maintained for trajectory deduction. It should be noted that the foregoing constant Jerk phase may be a process of linearly increasing an acceleration, or may be a process of linearly decreasing an acceleration. It should be further noted that, when the longitudinal sampling acceleration is the longitudinal non-creep acceleration, the upper-bound velocity for longitudinal trajectory deduction may be an upper limit velocity set by the ego vehicle or a maximum velocity limit of a road section on which the ego vehicle travels, and the lower-bound velocity for longitudinal trajectory deduction may be 0. When the longitudinal sampling acceleration is the longitudinal creep acceleration, and a current velocity of the ego vehicle is lower than a creep velocity, the upper-bound velocity for longitudinal trajectory deduction may be the creep velocity, and the lower-bound velocity for longitudinal trajectory deduction may be 0; or when a current velocity of the ego vehicle is higher than or equal to the creep velocity, the upper-bound velocity for longitudinal trajectory deduction may be an upper limit velocity set by the ego vehicle or a maximum velocity limit of a road, and the lower-bound velocity for longitudinal trajectory deduction may be the creep velocity. For example, the creep velocity may be preset by a system, or may be set by a user, for example, may be 5 km/h or 10 km/h, or may be another value. This is not specifically limited in embodiments of this application.

It should be understood that the foregoing four phases of the longitudinal trajectory deduction of the ego vehicle are merely examples for description. In a specific implementation process, the longitudinal trajectory deduction of the ego vehicle may include only one, two, or three of the foregoing phases. In an example, when the current acceleration currentAcc of the ego vehicle is equal to the longitudinal sampling acceleration targetAcc, the longitudinal trajectory deduction may be performed starting from the constant acceleration phase (3). For another example, when the current acceleration currentAcc of the ego vehicle is less than or equal to the longitudinal sampling acceleration targetAcc, and the current velocity of the ego vehicle reaches the upper-bound velocity or the lower-bound velocity, trajectory deduction may be performed from the constant velocity phase (4).

S803: Based on sampling in the sampling space, perform lateral path deduction on the game object based on a current location of the game object, and perform longitudinal trajectory deduction on the game object based on a current acceleration of the game object.

In some possible implementations, a game object trajectory deduction method may be the same as an ego vehicle trajectory deduction method. For example, based on SL coordinates shown in FIG. 7, the lateral path of the game object is deduced by using the following formula:

$$l(s_o) = \begin{cases} curObjLateralOffset & s_o \leq s_o StartThresh \\ as_o^3 + bs_o^2 + cs_o + d & s_o StartThresh < s_o \leq s_o CubicCurveThresh \\ objlateralOffset & s_o > s_o\ CubicCurveThresh \end{cases}$$

Herein, $s_o$ is a longitudinal location (unit: m) of the game object, and the location changes with a deduction moment; $l(s_o)$ is a lateral offset (unit: m) corresponding to the longitudinal location of the game object; $s_o StartThresh$ is a longitudinal start location of the game object; *curObjLateralOffset* is an offset (unit: m) corresponding to a current direction of the game object; $s_o CubicCurveThresh$ is a longitudinal location (unit: m) at which a cubic curve connection ends;

*objlateralOffset* is a lateral offset (unit: m) when the cubic curve connection of the game object ends, and corresponds to minObj*LateralOffset* or maxObj*LateralOffset* of the game object; and $s_o StartThresh$ and $s_o CubicCurveThresh$ may be dynamically adjusted based on a vehicle model and a radical degree of the game object. For example, when the vehicle model of the game object is a large vehicle, a value of $s_e StartThresh$ and/or $s_o CubicCurveThresh$ is large; and/or when the radical degree of the game object is high, a value of $s_o StartThresh$ and/or $s_o CubicCurveThresh$ is small. A path is connected from ($s_o StartThresh$, curObjLateralOffset) to ($s_o CubicCurveThresh$, objlateralOffset) by using a cubic curve, and tangent directions of the cubic curve at ($s_o StartThresh$, objcurLateralOffset) and ($s_o CubicCurveThresh$, objlateralOffset) are parallel to a direction of the intelligent driving device, where *a, b, c and d* are coefficients of a cubic polynomial, and values of the coefficients may be the same as or different from the values of the *a, b, c and d* in the formula for lateral path deduction of the ego vehicle.

In some possible implementations, for a longitudinal trajectory deduction method of the game object, refer to the description in the longitudinal trajectory deduction of the ego vehicle. For example, as shown in FIG. 11, the longitudinal acceleration deduction of the game object may include the following four phases: (1) a delay phase (t∈ [0, delayTime)): Longitudinal trajectory deduction is performed based on a current acceleration currentAcc of the game object; (2) a constant Jerk phase ( t ∈ [delayTime, jerkChangeTime) : An acceleration change rate is determined based on an acceleration at which the constant Jerk phase starts and a longitudinal sampling acceleration targetAcc, and longitudinal trajectory deduction is performed based on the constant Jerk; (3) a constant acceleration phase (t ∈ [jerkChangeTime, speedLimitTime)): The longitudinal sampling acceleration targetAcc is maintained for trajectory deduction; and (4) a constant velocity phase (t ≥ speedLimitTime): When a deduced velocity reaches an upper-bound velocity or a lower-bound velocity, the upper-bound velocity or the lower-bound velocity is maintained for trajectory deduction. For example, an upper-bound velocity for the longitudinal trajectory deduction of the game object may be a maximum velocity limit of a road section on which the game object travels, and a lower-bound velocity for the longitudinal trajectory deduction may be 0. It should be noted that the foregoing constant Jerk phase may be a process of linearly increasing an acceleration, or may be a process of linearly decreasing an acceleration.

It should be understood that the foregoing four phases of the longitudinal trajectory deduction of the game object are merely examples for description. In a specific implementation process, the longitudinal trajectory deduction of the game object may include only one, two, or three of the foregoing phases.

It should be understood that a deduced trajectory of the ego vehicle (or the game object) may be determined based on the deduced lateral path and the deduced longitudinal trajectory of the ego vehicle (or the game object). The deduced trajectory is a set of points at which coordinates of the ego vehicle (or the game object) change with time, namely, a result obtained through fusion of the longitudinal trajectory and the lateral offset of the ego vehicle (or the game object).

S804: Perform strategy cost evaluation on deduced trajectory pairs of the ego vehicle and the game object.

It should be understood that, based on the sampling space shown in FIG. 9, each time sampling is performed in the sampling space, a longitudinal sampling acceleration and a lateral offset of the ego vehicle and a longitudinal sampling acceleration and a lateral offset of the game object may be determined. It should be understood that a deduced trajectory that is of the ego vehicle and that is determined based on the foregoing sampling and a deduced trajectory that is of the game object and that is determined based on the foregoing sampling form a deduced trajectory pair.

For example, a strategy cost (hereinafter referred to as a cost) evaluation is performed on all deduced trajectory pairs of the ego vehicle and the game object. A lower strategy cost indicates a higher strategy benefit. In this case, the strategy is most likely to be used as an optimal strategy. In some possible implementations, strategy benefit evaluation may be performed from one or more of five dimensions: security, comfort, passability, right of way, and offset.

In some possible implementations, head orientations and velocities of the ego vehicle and the game object are considered to determine a security cost based on a minimum distance between the deduced trajectory of the ego vehicle and the deduced trajectory of the game object in the deduced trajectory pair. A smaller minimum distance based on the velocity and orientation indicates a higher security cost. When the minimum distance based on the velocity and orientation is less than a specific threshold, it is determined that the ego vehicle collides with the game object at the minimum distance between the deduced trajectories. The collision is distinguished as a first-type collision or a second-type collision based on motion statuses and location postures of the ego vehicle and the game object during the collision. For ease of description, in this embodiment of this application, the first-type collision is briefly denoted as "E2O", and the second-type collision is briefly denoted as "O2E".

For example, both the ego vehicle and the game object are in a traveling state. In this case, when the ego vehicle collides with a side enclosure or a tail of the game object in the traveling direction of the ego vehicle, the collision is considered as the first-type collision; or when the game object collides with a side enclosure or a tail of the ego vehicle in the traveling direction of the game object, the collision is considered as the second-type collision. Alternatively, when the game object is still, the ego vehicle collides with the game object, and the collision is considered as the first-type collision regardless of a collision location of the game object; or when the ego vehicle is still, the game object collides with the ego vehicle, and the collision is considered as the second-type collision regardless of a collision location of the ego vehicle.

It should be understood that the side enclosure of the vehicle includes a left body side enclosure and a right body side enclosure. For example, left and right sides including left and right body sides (columns A, B, and C) and an outer cover are referred to as left and right body side enclosures. For example, an area indicated by a dashed line shown in FIG. 12 is the left body side enclosure of the vehicle. The column A is disposed in front of the side enclosure and is connected to a front enclosure plate for mounting a front door hinge and front windshield, and is a supporting column for rotating a front side door switch. The column B is disposed in the middle of the side enclosure for mounting a front safety belt, a front door lock, and a rear side door hinge, and is a supporting column (for some small commercial vehicles, only left and right front doors are available, and the column B is located at the rear of the side enclosure) for rotating a rear side door switch. The column C is disposed at the rear of the side enclosure for mounting a rear seat belt and a rear side door lock, and is a supporting column for mounting rear window glass or a rear door. The column D is a supporting column which forms a rear door frame with a rear beam of a top cover, and the like, to provide support for a rear triangular window and the rear door frame. In some possible implementations, the body side enclosure is included in a side enclosure assembly, and the side enclosure assembly may further include an inner plate and a reinforcing part.

In some possible implementations, the side enclosure of the vehicle further includes left and right body side enclosures, and wheels. For example, a left side enclosure of the vehicle includes the left body side enclosure and left wheels (for example, including a left front wheel and a left rear wheel) of the vehicle. A right side enclosure of the vehicle includes the right body side enclosure and right wheels (for example, including a right front wheel and a right rear wheel) of the vehicle.

It should be understood that the tail of the vehicle may be a side that is of the vehicle and on which a rear bumper and a rear license plate are disposed.

It should be noted that when it is determined, based on the deduced trajectory of the ego vehicle and the deduced trajectory of the game object, that no collision occurs, the security cost is 0. When the collision is the first-type collision, the security cost is an approximate infinity value. When the collision is the second-type collision, the security cost may be determined based on a velocity of the game object at a collision location.

For example, a formula for calculating the security cost may be shown as follows:

$$\text{Cost}_{safety} = \frac{v - vThresMin}{vThresMax - vThresMin} * m.$$

Herein, $\text{Cost}_{safety}$ represents the security cost; v represents a velocity of the game object at a collision location when it is determined, based on the deduced trajectory of the ego vehicle and the deduced trajectory of the game object, that a collision occurs; *vThresMin* represents a lower velocity threshold for performing a security cost penalty with the velocity of the game object when the deduced trajectory of the ego vehicle collides with the deduced trajectory of the game object; and *vThresMax* represents an upper velocity threshold for performing a security cost penalty with the velocity of the game object when the deduced trajectory of the ego vehicle collides with the deduced trajectory of the game object; and m is a weight value. In some possible implementations, the weight value is related to a type of the game object.

In another example, a comfort cost of a deduced trajectory pair of the ego vehicle and the game object may be determined based on an acceleration change rate (a jerk value) of the ego vehicle (or the game object) in the deduced trajectory of the ego vehicle (or the game object). A formula for calculating the comfort cost of the ego vehicle (or the game object) may be as follows:

$$\text{Cost}_{comfortable} = \frac{jerk - jerkThresMin}{jerkThresMax - jerkThresMin}.$$

Herein, $\text{Cost}_{comfortable}$ represents the comfort cost, jerk represents the acceleration change rate of the ego vehicle (or the game object), *jerkThresMin* represents a lower limit threshold of the acceleration change rate of the ego vehicle (or the game object), and *jerkThresMax* represents an upper limit threshold of the acceleration change rate of the ego vehicle (or the game object). In some possible implementations, when jerk is less than *jerkThresMin*, $\text{Cost}_{comfortable}$ is 0; or when jerk is greater than *jerkThresMax*, $\text{Cost}_{comfortable}$ is 1. It should be understood that better comfort indicates a smaller comfort cost. The comfort cost includes an ego vehicle comfort cost and a game object comfort cost, and weights of the ego vehicle comfort cost and the game object comfort cost in the comfort cost may be different.

In still another example, a method for calculating a passability cost of a deduced trajectory pair of the ego vehicle and the game object may be shown as follows: A formula for calculating the passability cost of the ego vehicle (or the game object) may be as follows:

$$\text{Cost}_{passability} = \frac{deltaT - tThresMin}{tThresMax - tThresMin}.$$

Herein, Cost$_{passability}$ represents the passability cost; *deltaT* represents a difference between time at which a current deduced trajectory of the ego vehicle (or the game object) passes through a conflict point, and time at which a deduced trajectory of the ego vehicle (or the game object) passes through the conflict point, where in the deduced trajectory, a lateral sampling offset is an offset corresponding to a current direction, and a longitudinal sampling acceleration is 0; *tThresMin* represents a lower threshold of the time difference; and *tThresMax* represents an upper threshold of the time difference. In some possible implementations, when *deltaT* is less than *tThresMin*, Cost$_{passability}$ is 0; or when *deltaT* is greater than *tThresMax*, Cost$_{passability}$ is 1. It should be understood that better passability indicates a smaller passability cost. The passability cost includes a passability cost of the ego vehicle and a passability cost of the game object. The passability cost of the ego vehicle and the passability cost of the game object may have different weights in the passability cost.

In still another example, a right-of-way relationship between the ego vehicle and the game object is determined based on a deduced trajectory pair of the ego vehicle and the game object. If an interactive game enables an intelligent driving device with a high right-of-way to change a motion status, a high right-of-way cost penalty should be imposed on the change of the motion status, that is, the intelligent driving device with a high right-of-way tends not to change the current motion status. The right-of-way cost of the deduced trajectory pair of the ego vehicle and the game object may be shown as follows. A formula for calculating the right-of-way cost of the ego vehicle (or the game object) may be as follows:

$$\text{Cost}_{roadRight} = \frac{accThresMax - acc}{accThresMax - accThresMin}.$$

Herein, Cost$_{roadRight}$ represents the right-of-way cost; *acc* represents a current longitudinal sampling acceleration of the intelligent driving device with a high right-of-way; *accThresMin* represents a lower limit threshold of the longitudinal acceleration; and *accThresMax* represents an upper limit threshold of the longitudinal acceleration. In some possible implementations, when *acc* is greater than *accThresMax*, Cost$_{roadRight}$ is 0; or when acc is greater than *accThresMin*, Cost$_{roadRight}$ is 1. The right-of-way cost includes a right-of-way cost of the ego vehicle and a right-of-way cost of the game object, and the right-of-way cost of the ego vehicle and the right-of-way cost of the game object may have different weights in the right-of-way cost.

It should be noted that, when the strategy cost evaluation is performed based on the deduced trajectory pair of the ego vehicle and the game object, the foregoing costs may be weighted and summed to obtain a current final cost of the deduced trajectory pair of the ego vehicle and the game object. Cost weight distribution may be: security weight > road-of-way weight = passability weight > comfort weight, or may be another distribution manner. This is not specifically limited in this application.

It should be further noted that, when the strategy cost evaluation is performed based on the deduced trajectory pair of the ego vehicle and the game object, one or more of the foregoing costs may be used, or deformation and/or extension may be performed on the basis of the foregoing costs.

S805: Determine an initial game strategy based on a deduced trajectory pair with a smallest strategy cost.

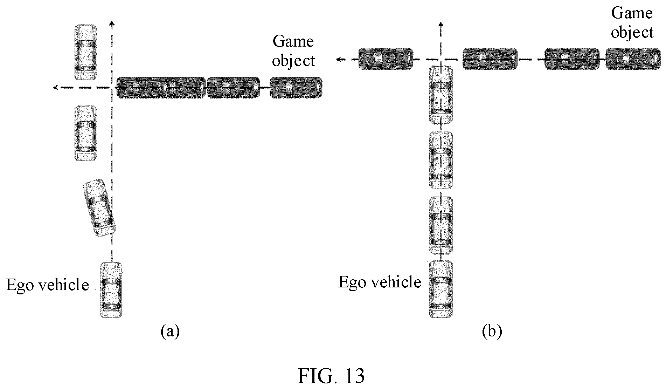

In some possible implementations, the initial game strategy is determined based on a deduced trajectory pair with a smallest strategy cost in all deduced trajectory pairs of the ego vehicle and the game object. For a longitudinal game strategy in the initial game strategy, if the ego vehicle passes through a conflict area earlier than the game object based on the trajectory deduction, the longitudinal game strategy of the initial game strategy is grabbing a way of the game object. If the ego vehicle passes through a conflict area later than the game object, the longitudinal game strategy is yielding to the game object. In some possible implementations, it is determined, based on the longitudinal sampling acceleration, whether the longitudinal game strategy is a creep strategy or a non-creep strategy. For example, when the longitudinal sampling acceleration of the ego vehicle belongs to a creep acceleration sampling space of the ego vehicle, the longitudinal game strategy is the creep strategy; or when the longitudinal sampling acceleration of the ego vehicle belongs to a non-creep acceleration sampling space of the ego vehicle, the longitudinal game strategy is the non-creep strategy. For a lateral game strategy in the initial game strategy, if a lateral sampling offset of the ego vehicle is not an offset (*curEgoLateralOffset*) corresponding to the current direction, an optimal lateral game strategy is to bypass the game object. If the lateral sampling offset of the ego vehicle is an offset (*curEgoLateralOffset*) corresponding to the current direction, the game object is ignored. For the non-creep strategy in the longitudinal game strategy, a decision-making tag of a grabway game object is GRABWAY (GW for short), and a decision-making tag of a yield game object is YIELD (YD for short). For the creep strategy, if the ego vehicle passes through the conflict area earlier than the game object based on the trajectory deduction, the game object is a creep-forward-grabway game object, and if the ego vehicle passes through the conflict area later than the game object, the game object is a creep-forward-yield game object. A decision-making tag of a creep-forward-grabway game object is CREEP-FORWARD-GRABWAY (CFG for short), and a decision-making tag of a creep-forward-yield game object is CREEP-FORWARD-YIELD (CFY for short). For the lateral game strategy, a decision-making tag of a bypass game object is BYPASS (BP for short), and a decision-making tag of an ignore game object is IGNORE (IG for short). For example, as shown in (a) in FIG. 13, the initial game strategy is a bypass-grabway strategy BP-GW; and as shown in (b) in FIG. 13, the initial game strategy is an ignore-creep-forward-yield strategy IG-CFY.

It should be further noted that, a difference between the creep strategy and the non-creep strategy lies in that: When the motion planning module performs trajectory planning for grabbing a way based on the creep strategy, the ego vehicle passes through the conflict area at a creep velocity as much as possible; and when the motion planning module performs trajectory planning for yielding based on the creep strategy, the ego vehicle travels at the creep velocity as much as possible in a time period in which the game object passes through the conflict area. That is, it may be understood that the motion planning module is instructed, by using the creep strategy, to plan, for the ego vehicle based on the creep trajectory, a trajectory of the ego vehicle in the conflict area, or a trajectory of the ego vehicle in the time period in which the game object passes through the conflict area. However, when the motion planning module performs trajectory planning for grabbing a way or yielding based on the non-creep strategy, there is no reference value for the traveling velocity of the ego vehicle when the ego vehicle passes through the conflict area or the traveling velocity of the ego vehicle when the game object passes through the conflict area. The ego vehicle may grab a way of the game object at a very high velocity, or may stop to yield to the game object.

S806: Perform stabilization processing on the initial game strategy to generate a final game strategy.

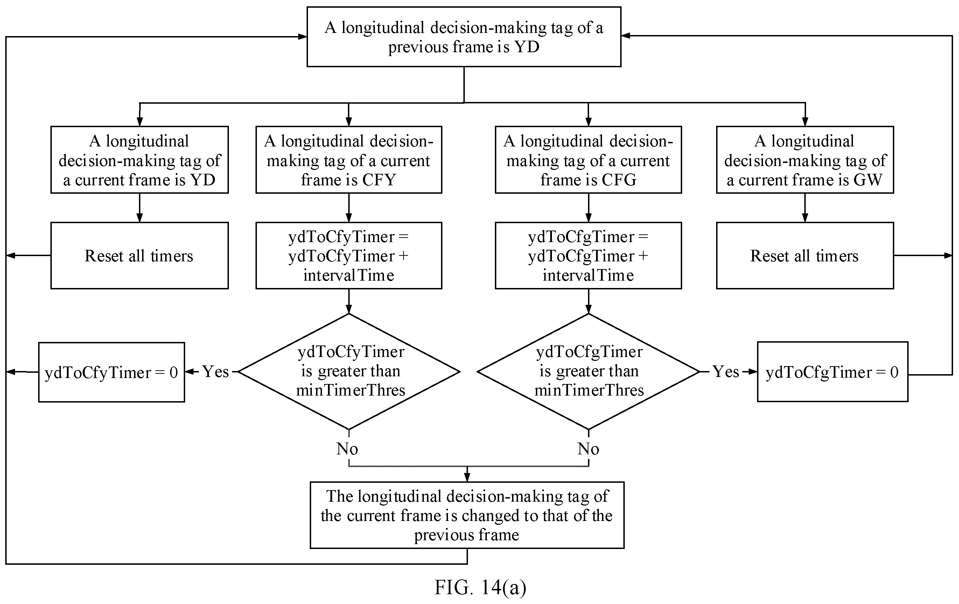

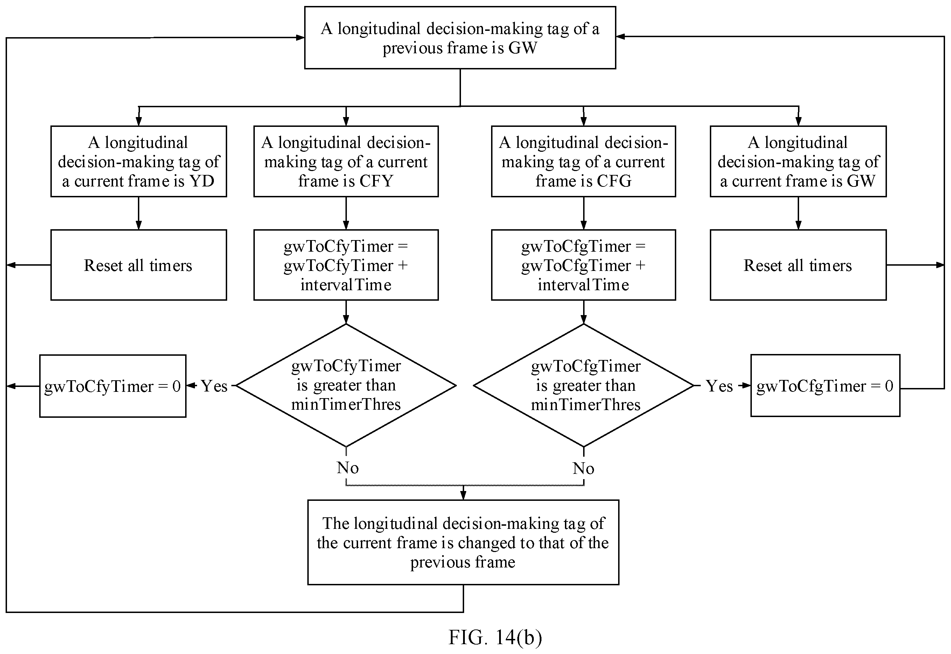

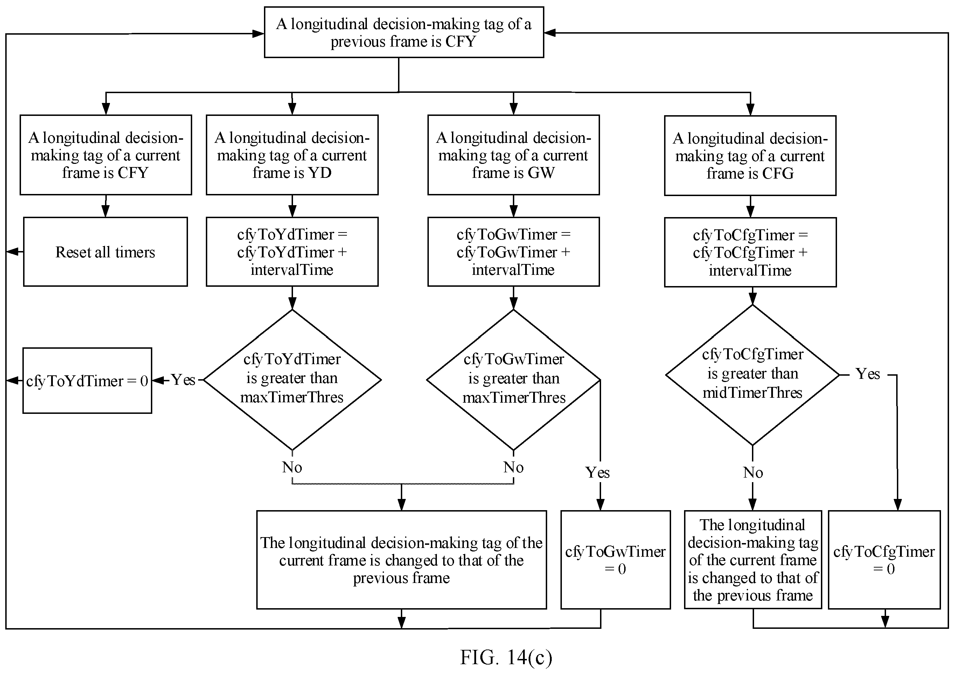

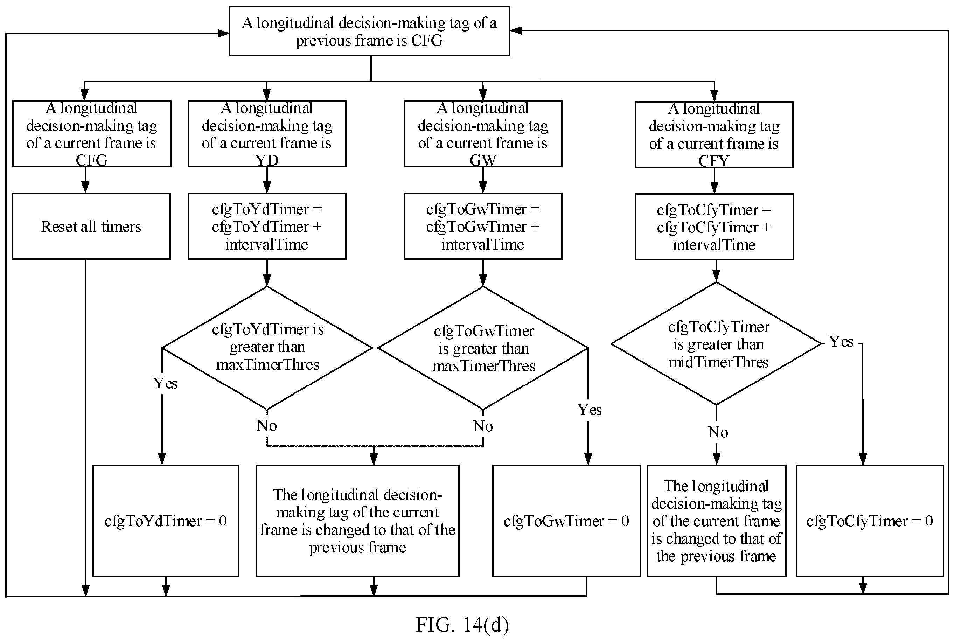

In some possible implementations, based on a hierarchical state machine, timers with different thresholds are set, so that it is more difficult to change a non-creep tag to a creep tag (YD/GW -> CFY/CFG), change between a creep-forward-grabway tag and a creep-forward-yield tag (CFY <-> CFG), and change a creep tag to a non-creep tag (CFY/CFG -> YD/GW). FIG. 14(a), FIG. 14(b), FIG. 14(c), and FIG. 14(d) are a schematic diagram of stabilization processing of a game strategy, where intervalTime is a time interval between a previous frame and a current frame; minTimerThres, midTimerThres, and maxTimerThres are timer time thresholds and increase sequentially; ydToCfyTimer is a timer indicating that a decision-making tag is changed from YD to CFY; ydToCfgTimer is a timer indicating that a decision-making tag is changed from YD to CFG; cfyToYdTimer is a timer indicating that a decision-making tag is changed from YD to CFY; cfyToGwTimer is a timer indicating that a decision-making tag is changed from CFY to GW; cfyToCfgTimer is timer indicating that a decision-making tag is changed from CFY to CFG; cfgToYdTimer is a timer indicating that a decision-making tag is changed from CFG to YD; cfgToGwTimer is a timer indicating that a decision-making tag is changed from CFG to GW; cfgToCfyTimer is a timer indicating that a decision-making tag is changed from CFG to CFY; gwToCfyTimer is a timer indicating that a decision-making tag is changed from GW to CFY; and gwToCfgTimer is a timer indicating that a decision-making tag is changed from GW to CFG.

For example, minTimerThres, midTimerThres, and maxTimerThres may be 0.1 second, 0.3 second, and 0.5 second respectively, or minTimerThres, midTimerThres, and maxTimerThres may alternatively be another values.

As shown in FIG. 14(a) and FIG. 14(b), when a longitudinal decision-making tag of the previous frame is YD or GW, and a longitudinal decision-making tag of the current frame is CFY or CFG, intervalTime is added to duration currently recorded by a corresponding timer. The longitudinal decision-making tag of the current frame is changed to CFY or CFG only when the duration recorded by the corresponding timer is greater than the timer time threshold minTimerThres. When the duration recorded by the corresponding timer is less than the timer time threshold minTimerThres, the longitudinal decision-making tag of the current frame is changed to the longitudinal decision-making tag of the previous frame.

As shown in FIG. 14(c) and FIG. 14(d), when a longitudinal decision-making tag of the previous frame is CFY or CFG, and a longitudinal decision-making tag of the current frame is YD or GW, intervalTime is added to duration currently recorded by a corresponding timer. The longitudinal decision-making tag of the current frame is changed to YD or GW only when time of the corresponding timer is greater than the timer time threshold maxTimerThres. When time of the corresponding timer is less than the timer time threshold maxTimerThres, the longitudinal decision-making tag of the current frame is changed to the longitudinal decision-making tag of the previous frame. When a longitudinal decision-making tag of the previous frame is CFY (or CFG), and a longitudinal decision-making tag of the current frame is CFG (or CFY), intervalTime is added to duration currently recorded by a corresponding timer. The longitudinal decision-making tag of the current frame is changed to CFG (or CFY) only when time of the corresponding timer is greater than the timer time threshold midTimerThres. When time of the corresponding timer is less than the timer time threshold midTimerThres, the longitudinal decision-making tag of the current frame is changed to the longitudinal decision-making tag of the previous frame.

According to the motion trajectory planning method provided in this embodiment of this application, based on refined lateral and longitudinal sampling trajectories, path reasonability is considered laterally, and sampling is separately performed based on the creep acceleration sampling space and the non-creep acceleration sampling space longitudinally. An upper-bound velocity and a lower-bound velocity for trajectory deduction can be used to reduce a difference between a deduced trajectory and an actual motion trajectory. On the premise of ensuring safety and complying with traffic regulations, the ego vehicle actively maintains low-velocity creep to probe a behavior of the game object. If the behavior of the game object is radical, a time distance or a space distance between the ego vehicle and the game object is less than a safe distance. In this case, the ego vehicle can be ensured to yield to the game object from a creep state (that is, non-creep yield). If the behavior of the game object is conservative, the ego vehicle may have a space to grab a way of the game object. In this case, the ego vehicle may find a proper opportunity to grab a way of the game object from a creep state (that is, non-creep grabway).

In this embodiment of this application, after the interactive game decision-making module shown in FIG. 4 generates the final game strategy, the motion planning module generates, based on the final game strategy, a velocity curve that meets a kinematics requirement of the intelligent driving device. The following uses an example in which the final game strategy is a creep strategy to describe a method for the motion planning module to plan a motion trajectory.

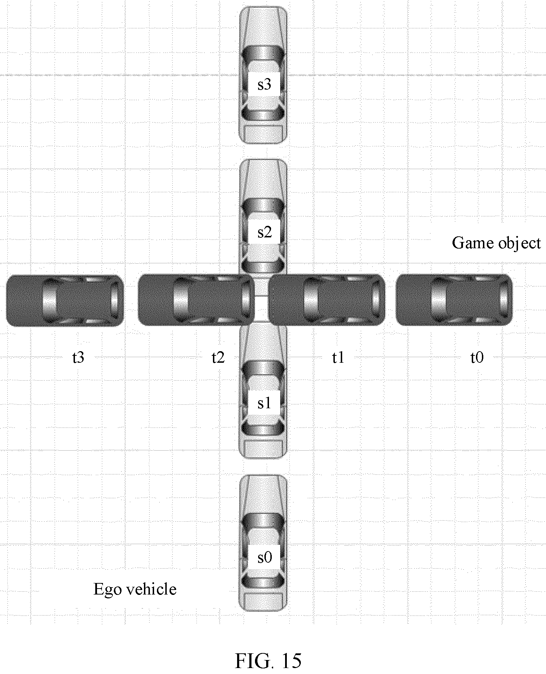

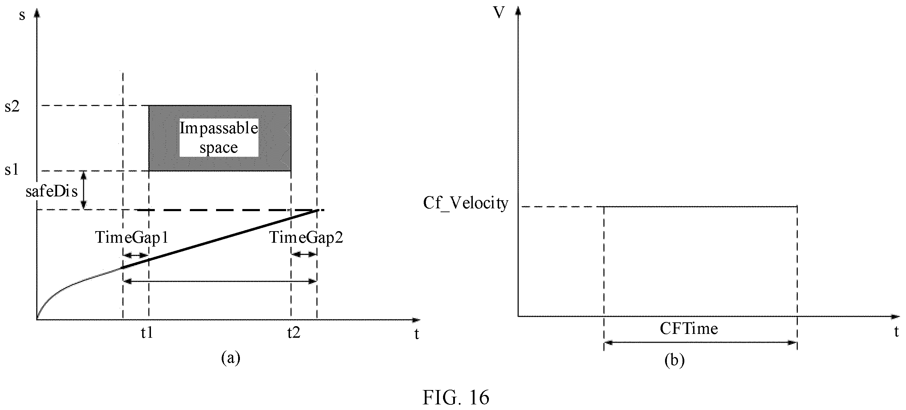

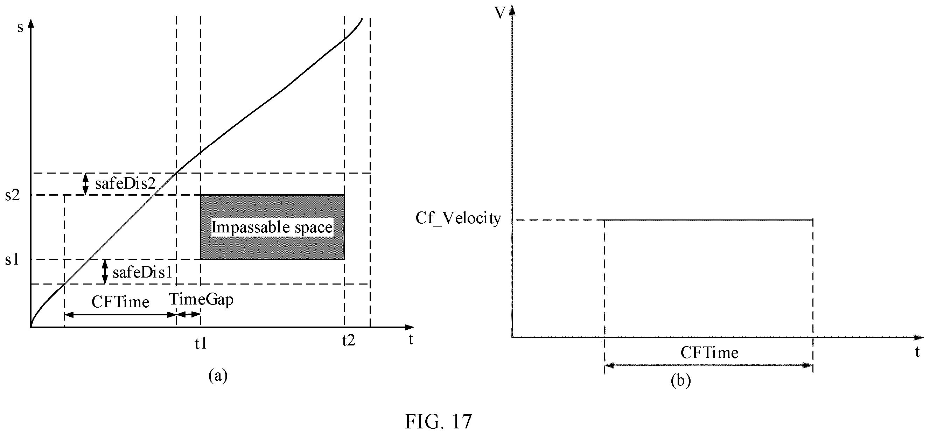

For example, the motion planning module determines, based on the planned traveling path of the ego vehicle and the deduced trajectory of the game object, a time period in which a first location space of the game object occupies a second location space of the ego vehicle, and generates a time-based space constraint by using a collision detection algorithm. A game scenario shown in FIG. 15 is used as an example. A space (namely, the "second location space") occupied by the game object from s1 to s2 of the planned traveling path of the ego vehicle between moments t1 and t2 (namely, the "time period") is an impassable space of the ego vehicle, namely an impassable space shown by a shadow part in each of (a) in FIG. 16 and (a) in FIG. 17, where t1 is a collision start moment, and t2 is a collision end moment.

Further, a location at which creep starts and creep duration are determined based on the final game strategy, to plan a longitudinal trajectory for the ego vehicle. If the final game strategy is a creep-forward-yield strategy, a location at which the creep-forward-yield strategy ends may be s1, and the creep duration may be duration between t1 and t2. Then, a location at which the creep-forward-yield strategy starts is determined based on the location at which the creep-forward-yield strategy ends, for example, a creep distance is determined based on a creep velocity and the creep duration, and the location at which the creep-forward-yield strategy starts is determined based on the creep distance and the location at which the creep-forward-yield strategy ends. In this way, a velocity of the ego vehicle from the current location to the location at which the creep-forward-yield strategy starts is determined based on the location at which the creep-forward-yield strategy starts and the current location of the ego vehicle. If the final game strategy is a creep-forward-grabway strategy, a location at which the creep-forward-grabway strategy starts may be s1, and the ego vehicle ends the creep-forward-grabway strategy at s2 at the t1 moment. In this way, the creep duration is determined based on a creep velocity and a creep traveling distance, and a moment at which the creep-forward-grabway strategy starts is determined based on the creep duration and the t1 moment. In addition, a velocity of the ego vehicle from the current location to the location at which the creep-forward-grabway strategy starts is planned based on the current location of the ego vehicle, and the location and the moment at which the creep-forward-grabway strategy starts.

In some possible implementations, as the behavior of the game object is unspecific, a safe distance in time and space is introduced. For a creep-forward-yield scenario, as shown in (a) in FIG. 16, in terms of time, TimeGap1 and TimeGap2 are introduced, so that it is expected that the ego vehicle enters a creep state in advance within TimeGap1 before conflict start time t1, and ends the creep state within TimeGap2 after conflict end time t2, that is, creep duration CFTime = TimeGap1 + TimeGap2 + (t2 - t1). In terms of space, a safe distance safeDis is introduced to maintain an extra safeDis distance in a space in which yielding is expected based on the original conflict. This design can increase the space distance between the ego vehicle and the game object, thereby improving creep safety to a specific extent. Further, as shown in (b) in FIG. 16, within the creep duration CFTime, the intelligent driving device maintains traveling at a creep velocity Cf_Velocity. For a creep-forward-grabway scenario, as shown in (a) in FIG. 17, in terms of time, TimeGap is introduced, so that it is expected that the ego vehicle ends the creep state within TimeGap before the collision start time t1. In terms of space, safe distances safeDis1 and safeDis2 are introduced, so that in a space in which grabway is expected, extra safeDis1 and safeDis2 distances are maintained based on the original conflict, that is, the creep distance CFdis = safeDis1 + safeDis2 + (s2 - s1), and the creep duration CFTime = CFTime/Cf_Velocity. Further, as shown in (b) in FIG. 17, within the creep duration CFTime, the intelligent driving device maintains traveling at a creep velocity Cf_Velocity. This design can ensure the stability of the game strategy to a specific extent, and reduce game strategy change caused by uncertainty.

For example, the TimeGap1, TimeGap2, and TimeGap may be separately 0.5 second, or may be separately another value, and values of the three may be the same or different. The safeDis, safeDis1, and safeDis2 may be separately 0.5 meter, or may be separately 1 meter, or may be separately another value, and values of the three may be the same or different.

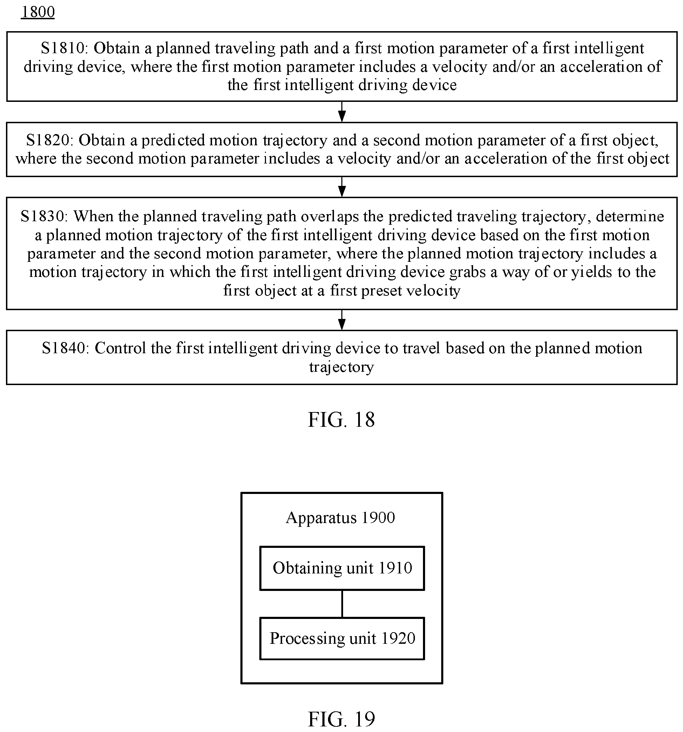

FIG. 18 is a schematic flowchart of a motion trajectory planning method 1800 according to an embodiment of this application. The method shown in the flowchart may be applied to the intelligent driving device shown in FIG. 1, or may be performed by the system shown in FIG. 3 or FIG. 4. The method 1800 includes the following steps.

S1810: Obtain a planned traveling path and a first motion parameter of the first intelligent driving device, where the first motion parameter includes a velocity and/or an acceleration of the first intelligent driving device.

For example, the first intelligent driving device may be the ego vehicle in the foregoing embodiments, or may be another object that can move autonomously, for example, an intelligent robot.

For example, the planned traveling path of the first intelligent driving device may be obtained from a planning and control module. The first motion parameter may be obtained from a sensing system. The first motion parameter may include but is not limited to a velocity, an acceleration, a correspondence between a location of the first intelligent driving device and time, and the like.

S1820: Obtain a predicted motion trajectory and a second motion parameter of a first object, where the second motion parameter includes a velocity and/or an acceleration of the first object.

It should be understood that, herein, an entity for obtaining the predicted motion trajectory and the second motion parameter of the first object and an entity for obtaining the planned traveling path and the first motion parameter of the first intelligent driving device may be a same entity. For example, the same entity may be the first intelligent driving device.

For example, the first object may be the game object in the foregoing embodiments, or may be another object that may affect the first intelligent driving device in planning a motion trajectory. The second motion parameter may include but is not limited to a velocity, an acceleration, a correspondence between a location of the first object and time, and the like.

For example, for a method for obtaining the predicted motion trajectory and the second motion parameter of the first object, refer to the description in the foregoing embodiment, for example, the description in S501 of the method 500. Details are not described herein again.

S1830: When the planned traveling path overlaps the predicted motion trajectory, determine the planned motion trajectory of the first intelligent driving device based on the first motion parameter and the second motion parameter, where the planned motion trajectory includes a motion trajectory in which the first intelligent driving device grabs a way of or yields to the first object at a first preset velocity.

For example, for a method for determining that the planned traveling path overlaps the predicted motion trajectory, refer to the description in the foregoing embodiment, for example, the description in S502 of the method 500. Details are not described herein again.

For example, a first game strategy may be the final game strategy in the foregoing embodiment, and more specifically, may be the creep strategy, CFY, or CFG in the longitudinal game strategy in the foregoing embodiment.

In some possible implementations, the first preset velocity is greater than or equal to 3 km/h and is less than or equal to 15 km/h.

For example, the first preset velocity may be the "creep velocity" in the foregoing embodiment, or may be another velocity at which the planned motion trajectory of the first intelligent driving device is not easily affected by trajectory prediction precision of the first object.

For example, for a method for determining the planned motion trajectory based on the first motion parameter and the second motion parameter, refer to the description in the foregoing embodiment, for example, the description in the method 800. Details are not described herein again.

S1840: Control the first intelligent driving device to travel based on the planned motion trajectory.

Optionally, the determining the planned motion trajectory based on the first motion parameter and the second motion parameter includes: determining a first deduced trajectory of the first intelligent driving device based on a first sampling acceleration and the first motion parameter, where the first sampling acceleration is an acceleration that is determined in a sampling space and that may be reached by the first intelligent driving device; determining a second deduced trajectory of the first object based on a second sampling acceleration and the second motion parameter, where the second sampling acceleration is an acceleration that is determined in the sampling space and that may be reached by the first object; when the first deduced trajectory and the second deduced trajectory indicate that the first intelligent driving device does not collide with the first object, or that the first object in a traveling direction of the first object collides with the first intelligent driving device in a direction that deviates away from a traveling direction of the first intelligent driving device at a first moment, determining the first game strategy based on the first deduced trajectory and the second deduced trajectory, where the first moment is a moment after a current moment.

For example, the first sampling acceleration and the second sampling acceleration may be the longitudinal sampling acceleration in the foregoing embodiment. More specifically, the first sampling acceleration may be the longitudinal sampling acceleration in the foregoing creep longitudinal sampling space.

For example, the first deduced trajectory and the second deduced trajectory may be deduced trajectories in the method 800 in the foregoing embodiment. For a specific method for determining the first deduced trajectory and the second deduced trajectory, refer to descriptions in S802 to S804 in the method 800. Details are not described herein again.

For example, for a method for determining, based on the first deduced trajectory and the second deduced trajectory, whether the first intelligent driving device collides with the first object, and a collision type, refer to the description in the foregoing method 1100. Details are not described herein again.

It may be understood that the step of determining a "deduced trajectory" in this embodiment of this application may be completed by the interactive game decision-making module in the foregoing embodiment, and the step of determining a "planned motion trajectory" in this embodiment of this application may be completed by the motion planning module in the foregoing embodiment.

Optionally, the first motion parameter includes the velocity and/or the acceleration of the first intelligent driving device, and the determining a first deduced trajectory of the first intelligent driving device based on a first sampling acceleration and the first motion parameter includes: determining a first deduced sub-trajectory based on the first sampling acceleration and the velocity and/or the acceleration of the first intelligent driving device, where a velocity of the first intelligent driving device at an end point of the first deduced sub-trajectory is the first preset velocity; determining a second deduced sub-trajectory based on the first preset velocity, where the end point of the first deduced sub-trajectory is a start point of the second deduced sub-trajectory; and determining the first deduced trajectory based on the first deduced sub-trajectory and the second deduced sub-trajectory.

For example, the first deduced sub-trajectory may include a trajectory in at least one of the delay phase (t $\in$ [0, delayTime) ), the constant acceleration change rate phase ( t $\in$ [delayTime, jerkChangeTime) ) and the constant acceleration phase ( t $\in$ [jerkChangeTime, speedLimitTime)) in the foregoing embodiment, and the second deduced sub-trajectory may be a trajectory in the constant acceleration phase in the foregoing embodiment.

For example, for determining the first deduced sub-trajectory and the second deduced sub-trajectory, refer to descriptions in S802 and S803 in the method 800. Details are not described herein again.

In some possible implementations, the first deduced trajectory further includes a third deduced sub-trajectory, and the third deduced sub-trajectory may include a trajectory in which a traveling velocity decreases from the first preset velocity to zero (namely, stopping).

Optionally, the determining the planned motion trajectory based on the first deduced trajectory and the second deduced trajectory includes: determining a first game strategy based on the first deduced trajectory and the second deduced trajectory, where the first game strategy indicates the first intelligent driving device to grab a way of or yield to the first object at the first preset velocity; and when first duration is greater than a first time threshold, determining the planned motion trajectory based on the first game strategy, the planned traveling path, and the second deduced trajectory.

For example, duration of the first game strategy may be duration of any timer in the ydToCfgTimer, ydToCfyTimer, gwToCfgTimer and the gwToCfyTimer in the foregoing embodiment; or duration of the first game strategy may be duration of any timer in the cfgToCfyTimer or the cfyToCfgTimer in the foregoing embodiment.

Optionally, the determining the planned motion trajectory based on the first game strategy, the planned traveling path and the second deduced trajectory includes: determining, based on the planned traveling path and the second deduced trajectory, a time period in which a first location space of the first object occupies a second location space of the first intelligent driving device; and determining the planned motion trajectory based on the first game strategy, the second location space, and the time period, where the planned motion trajectory includes a trajectory in which the first intelligent driving device travels at the first preset velocity in the second location space, or the planned motion trajectory includes a trajectory in which the first intelligent driving device travels at the first preset velocity in the time period.

For example, the planned motion trajectory may be a trajectory, shown in FIG. 16 or FIG. 17, of the intelligent driving device that keeps moving at a creep velocity Cf Velocity within the creep duration CFTime in the foregoing embodiment.

For example, for a more specific method for determining the planned motion trajectory based on the first game strategy, the planned traveling path, and the second deduced trajectory, refer to the description in the foregoing embodiment. Details are not described herein again.

Optionally, before the determining the first game strategy based on the first deduced trajectory and the second deduced trajectory, the method further includes: determining that a strategy cost of a deduced trajectory pair including the first deduced trajectory and the second deduced trajectory is the smallest.

For example, the strategy cost may be the strategy cost in the foregoing embodiment.

For a method for determining the strategy cost of the first game strategy based on the type of the first object, the first deduced trajectory, and the second deduced trajectory, refer to the description in S804 in the method 800. Details are not described herein again.

Optionally, before the obtaining a predicted motion trajectory and a second motion parameter of a first object, the method further includes: determining that a distance between the first object and the first intelligent driving device is less than or equal to a first distance threshold and is greater than or equal to a second distance threshold.

For example, the first distance threshold may be the preset distance in S501 in the foregoing method 500.

For example, the second distance threshold may be determined based on CIPV screening in the foregoing embodiment, or may be determined by using another method.

According to the motion trajectory planning method provided in this embodiment of this application, on the premise of ensuring safety and complying with traffic regulations, the ego vehicle can actively maintain the creep velocity to probe a behavior of the game object, so that the planned motion trajectory of the ego vehicle is not easily affected by the game object. Especially, in a narrow lane on which both a motor vehicle and a non-motor vehicle may travel or an intersection without an indicator, the ego vehicle does not have problems such as unexpected and frequent mistaken light and heavy braking, mistaken stopping, continuous yielding, and simultaneous starting and stopping. This helps improve passing efficiency of the ego vehicle, and improve rider experience of a user.

In embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

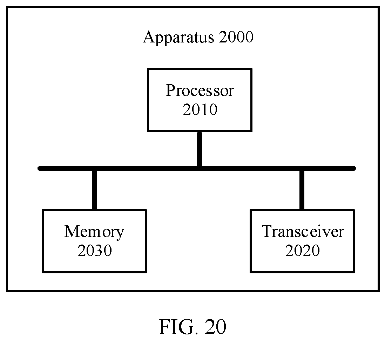

The foregoing describes in detail the method provided in embodiments of this application with reference to FIG. 5 to FIG. 18. The following describes in detail an apparatus provided in an embodiment of this application with reference to FIG. 19 and FIG. 20. It should be understood that descriptions of apparatus embodiments correspond to the descriptions of the method embodiments. Therefore, for content that is not described in detail, refer to the foregoing method embodiments. For brevity, details are not described herein again.

FIG. 19 is a schematic block diagram of a motion trajectory planning apparatus 1900 according to an embodiment of this application. The apparatus 1900 includes an obtaining unit 1910 and a processing unit 1920. The obtaining unit 1910 may implement a corresponding communication function, and the processing unit 1920 is configured to perform data processing.

Optionally, the apparatus 1900 may further include a storage unit. The storage unit may be configured to store instructions and/or data. The processing unit 1920 may read the instructions and/or data in the storage unit, to enable the apparatus to implement the foregoing method embodiments.

The apparatus 1900 may include units configured to perform the method in FIG. 5, FIG. 8, or FIG. 18. In addition, the units in the apparatus 1900 and the foregoing other operations and/or functions are respectively used to implement corresponding procedures in the method embodiment in FIG. 5, FIG. 8, or FIG. 18.

When the apparatus 1900 is configured to perform the method 1800 in FIG. 18, the obtaining unit 1910 may be configured to perform S1810 and S1820 in the method 1800, and the processing unit 1920 may be configured to perform S1830 and S1840 in the method 1800.

Specially, the obtaining unit 1910 of the apparatus 1900 is configured to: obtain a planned traveling path and a first motion parameter of a first intelligent driving device, where the first motion parameter includes a velocity and/or an acceleration of the first intelligent driving device; and obtain a predicted motion trajectory and a second motion parameter of a first object, where the second motion parameter includes a velocity and/or an acceleration of the first object. The processing unit 1920 is configured to: when the planned traveling path overlaps the predicted motion trajectory, determine the planned motion trajectory of the first intelligent driving device based on the first motion parameter and the second motion parameter, where the planned motion trajectory includes a motion trajectory in which the first intelligent driving device grabs a way of or yield to the first object at a first preset velocity; and control the first intelligent driving device to travel based on the planned motion trajectory.

In some possible implementations, the processing unit 1920 is specifically configured to: determine a first deduced trajectory of the first intelligent driving device based on a first sampling acceleration and the first motion parameter, where the first sampling acceleration is an acceleration that is determined in a sampling space and that may be reached by the first intelligent driving device; determine a second deduced trajectory of the first object based on a second sampling acceleration and the second motion parameter, where the second sampling acceleration is an acceleration that is determined in the sampling space and that may be reached by the first object; and when the first deduced trajectory and the second deduced trajectory indicate that the first intelligent driving device does not collide with the first object, or that the first object collides with a side enclosure or tail of the first intelligent driving device in a traveling direction of the first object, determine the planned motion trajectory based on the first deduced trajectory and the second deduced trajectory, where the first moment is a moment after a current moment.

In some possible implementations, the processing unit 1920 is specifically configured to: determine a first deduced sub-trajectory based on the first sampling acceleration and the velocity and/or the acceleration of the first intelligent driving device, where a velocity of the first intelligent driving device at an end point of the first deduced sub-trajectory is the first preset velocity; determine a second deduced sub-trajectory based on the first preset velocity, where the end point of the first deduced sub-trajectory is a start point of the second deduced sub-trajectory, and the first deduced trajectory includes the first deduced sub-trajectory and the second deduced sub-trajectory.

In some possible implementations, the processing unit 1920 is specifically configured to: determine a first game strategy based on the first deduced trajectory and the second deduced trajectory, where the first game strategy indicates the first intelligent driving device to grab a way of or yield to the first object at the first preset velocity; and when first duration is greater than a first time threshold, determine the planned motion trajectory based on the first game strategy, the planned traveling path, and the second deduced trajectory.

In some possible implementations, the processing unit 1920 is specifically configured to: determine, based on the planned traveling path and the second deduced trajectory, a time period in which a first location space of the first object occupies a second location space of the first intelligent driving device; and determine the planned motion trajectory based on the first game strategy, the second location space, and the time period, where the planned motion trajectory includes a trajectory in which the first intelligent driving device travels at the first preset velocity in the second location space, or the planned motion trajectory includes a trajectory in which the first intelligent driving device travels at the first preset velocity in the time period.

In some possible implementations, the processing unit 1920 is specifically configured to determine that a strategy cost of a deduced trajectory pair including the first deduced trajectory and the second deduced trajectory is the smallest.

In some possible implementations, the processing unit 1920 is specifically configured to: determine the first deduced trajectory based on a lateral offset of the first intelligent driving device, the first sampling acceleration, and the first motion parameter, where the lateral offset is an offset perpendicular to the traveling direction of the first intelligent driving device.

In some possible implementations, the processing unit 1920 is further configured to: determine that a distance between the first object and the first intelligent driving device is less than or equal to a first distance threshold and is greater than or equal to a second distance threshold.

In some possible implementations, the first preset velocity is greater than or equal to 3 km/h and is less than or equal to 15 km/h.

It should be understood that division into units in the apparatus is merely logical function division. During actual implementation, all or some of the units may be integrated into one physical entity or may be physically separated. In addition, a unit in the apparatus may be implemented in a form of a processor invoking software. For example, the apparatus includes a processor, the processor is connected to a memory, the memory stores instructions, and the processor invokes the instructions stored in the memory, to implement any one of the foregoing methods or functions of units in the apparatus. The processor is, for example, a general-purpose processor, like a CPU or a microprocessor, and the memory is a memory inside the apparatus or a memory outside the apparatus. Alternatively, a unit in the apparatus may be implemented in a form of a hardware circuit, and functions of some or all units may be implemented by designing the hardware circuit. The hardware circuit may be understood as one or more processors. For example, in an implementation, the hardware circuit is an ASIC, and functions of some or all units are implemented by designing a logical relationship between elements in the circuit. For another example, in another implementation, the hardware circuit may be implemented by using a PLD. Using an FPGA as an example, the FPGA may include a large quantity of logic gate circuits, and a connection relationship between the logic gate circuits is configured by using a configuration file, to implement functions of some or all of the foregoing units. All the units of the foregoing apparatus may be implemented in a form of software invoked by a processor, or may be implemented in a form of a hardware circuit, or some of the units are implemented in a form of software invoked by a processor, and the remaining units are implemented in a form of a hardware circuit.

In embodiments of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit, and the logical relationship of the hardware circuit is fixed or reconfigurable, for example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, an NPU, a TPU, or a DPU.

It can be learned that the units in the foregoing apparatus may be configured to implement one or more processors (or processing circuits) of the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated together and implemented in a form of a system-on-a-chip (system-on-a-chip, SOC). The SOC may include at least one processor, configured to implement any one of the foregoing methods or implement functions of units of the apparatus. Types of the at least one processor may be different, for example, include a CPU and an FPGA, a CPU and an artificial intelligence processor, a CPU and a GPU, and the like.

For example, the obtaining unit 1910 may include the game object screening module shown in FIG. 4, and the processing unit 1920 may include the interactive game decision-making module and/or the motion planning module shown in FIG. 4.

In a specific implementation process, operations performed by the obtaining unit 1910 and the processing unit 1920 may be performed by a same processor, or may be performed by different processors, for example, may be performed by a plurality of processors. In an example, one or more processors may be connected to one or more sensors in the sensing system 120 in FIG. 1, to obtain the first motion parameter of the intelligent driving device from the one or more sensors, and process the first motion parameter to obtain the deduced trajectory of the intelligent driving device. Alternatively, one or more processors may be further connected to a power system of the intelligent driving device, to control the intelligent driving device to travel based on the planned motion trajectory. For example, in a specific implementation process, the one or more processors may be disposed in an in-vehicle infotainment, or may be disposed in another in-vehicle terminal. For example, in a specific implementation process, the apparatus 1900 may be a chip disposed in an in-vehicle infotainment or another in-vehicle terminal. For example, in a specific implementation process, the apparatus 1900 may be the computing platform 150 shown in FIG. 1 that is disposed in the intelligent driving device.

FIG. 20 is a schematic block diagram of a motion trajectory planning apparatus according to an embodiment of this application. The motion trajectory planning apparatus 2000 shown in FIG. 20 may include a processor 2010, a transceiver 2020, and a memory 2030. The processor 2010, the transceiver 2020, and the memory 2030 are connected by using an internal connection path. The memory 2030 is configured to store instructions. The processor 2010 is configured to execute the instructions stored in the memory 2030, so that the transceiver 2020 receives/sends some parameters. Optionally, the memory 2030 may be coupled to the processor 2010 by using an interface, or may be integrated with the processor 2010.

It should be noted that the transceiver 2020 may include but is not limited to a transceiver apparatus of an input/output interface (input/output interface), to implement communication between the apparatus 2000 and another device or a communication network.

In an implementation process, steps of the foregoing method may be completed by using an integrated logic circuit of hardware in the processor 2010 or by using instructions in a form of software. The method disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory 2030, and the processor 2010 reads information from the memory 2030 and completes the steps of the foregoing methods in combination with the hardware of the processor. To avoid repetition, details are not described herein again.

The processor 2010 may be a general-purpose CPU, a microprocessor, an ASIC, a GPU, or one or more integrated circuits, and is configured to execute a related program, to implement the motion trajectory planning method in the method embodiments of this application. The processor 2010 may be an integrated circuit chip and has a signal processing capability. In a specific implementation process, steps of the motion trajectory planning method in this application may be completed by using an integrated logic circuit of hardware in the processor 2010 or instructions in a form of software. Alternatively, the processor 2010 may be a general-purpose processor, a DSP, an ASIC, an FPGA or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory 2030. The processor 2010 reads information in the memory 2030, and performs the motion trajectory planning method in the method embodiments of this application in combination with hardware of the processor.

The memory 2030 may be a read-only memory (read-only memory, ROM), a static storage device, a dynamic storage device, or a random access memory (random access memory, RAM).

The transceiver 2020 uses a transceiver apparatus, for example, but not limited to a transceiver, to implement communication between the apparatus 2000 and another device or a communication network.

For example, the transceiver 2010 may include the game object screening module shown in FIG. 4, and the processor 2020 may include the interactive game decision-making module and/or the motion planning module shown in FIG. 4.

An embodiment of this application further provides an intelligent driving device. The intelligent driving device may include the foregoing apparatus 1900 or the foregoing apparatus 2000.

An embodiment of this application further provides a computer-readable medium. The computer-readable medium stores program code or instructions. When the computer program code or the instructions are executed by a processor of a computer, the processor is enabled to implement the method in FIG. 5, FIG. 8, or FIG. 18.

An embodiment of this application further provides a chip, including at least one processor and a memory. The at least one processor is coupled to the memory, and is configured to read and execute instructions in the memory, to perform the method in FIG. 5, FIG. 8, or FIG. 18.

All aspects, embodiments, or features are presented in this application based on a system that includes a plurality of devices, components, and modules. It should be appreciated and understood that, each system may include another device, component, module, and the like, and/or may not include all devices, components, modules, and the like discussed with reference to the accompanying drawings. In addition, a combination of these solutions may be used.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In addition, in embodiments of this application, the terms such as "for example" and "such as" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "corresponding (corresponding, relevant)" and "corresponding (corresponding)" may be interchangeably used sometimes. It should be noted that meanings expressed by the terms are consistent when differences are not emphasized.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A motion trajectory planning method, comprising:

obtaining a planned traveling path and a first motion parameter of a first intelligent driving device, wherein the first motion parameter comprises a velocity and/or an acceleration of the first intelligent driving device;
obtaining a predicted motion trajectory and a second motion parameter of a first object, wherein the second motion parameter comprises a velocity and/or an acceleration of the first object;
when the planned traveling path overlaps the predicted motion trajectory, determining a planned motion trajectory of the first intelligent driving device based on the first motion parameter and the second motion parameter, wherein the planned motion trajectory comprises a motion trajectory in which the first intelligent driving device grabs a way of or yields to the first object at a first preset velocity; and
controlling the first intelligent driving device to travel based on the planned motion trajectory.

2. The method according to claim 1, wherein the determining a planned motion trajectory of the first intelligent driving device based on the first motion parameter and the second motion parameter comprises:

determining a first deduced trajectory of the first intelligent driving device based on a first sampling acceleration and the first motion parameter, wherein the first sampling acceleration is an acceleration that is determined in a sampling space and that may be reached by the first intelligent driving device;

determining a second deduced trajectory of the first object based on a second sampling acceleration and the second motion parameter, wherein the second sampling acceleration is an acceleration that is determined in the sampling space and that may be reached by the first object; and

when the first deduced trajectory and the second deduced trajectory indicate that the first intelligent driving device does not collide with the first object, or that the first object collides with a side enclosure or a tail of the first intelligent driving device in a traveling direction of the first object at a first moment, determining the planned motion trajectory based on the first deduced trajectory and the second deduced trajectory, wherein the first moment is a moment after a current moment.

3. The method according to claim 2, wherein the determining a first deduced trajectory of the first intelligent driving device based on a first sampling acceleration and the first motion parameter comprises:

determining a first deduced sub-trajectory based on the first sampling acceleration and the velocity and/or the acceleration of the first intelligent driving device, wherein a velocity of the first intelligent driving device at an end point of the first deduced sub-trajectory is the first preset velocity;

determining a second deduced sub-trajectory based on the first preset velocity, wherein the end point of the first deduced sub-trajectory is a start point of the second deduced sub-trajectory; and

determining the first deduced trajectory based on the first deduced sub-trajectory and the second deduced sub-trajectory.

4. The method according to claim 2 or 3, wherein the determining the planned motion trajectory based on the first deduced trajectory and the second deduced trajectory comprises:

determining a first game strategy based on the first deduced trajectory and the second deduced trajectory, wherein the first game strategy indicates the first intelligent driving device to grab a way of or yield to the first object at the first preset velocity; and

when duration of the first game strategy is greater than a first time threshold, determining the planned motion trajectory based on the first game strategy, the planned traveling path, and the second deduced trajectory.

5. The method according to claim 4, wherein the determining the planned motion trajectory based on the first game strategy, the planned traveling path, and the second deduced trajectory comprises:

determining, based on the planned traveling path and the second deduced trajectory, a time period in which a first location space of the first object occupies a second location space of the first intelligent driving device; and

determining the planned motion trajectory based on the first game strategy, the second location space, and the time period, wherein the planned motion trajectory comprises a trajectory in which the first intelligent driving device travels at the first preset velocity in the second location space, or the planned motion trajectory comprises a trajectory in which the first intelligent driving device travels at the first preset velocity in the time period.

6. The method according to claim 4, wherein before the determining a first game strategy based on the first deduced trajectory and the second deduced trajectory, the method further comprises:

determining that a strategy cost of a deduced trajectory pair comprising the first deduced trajectory and the second deduced trajectory is the smallest.

7. The method according to any one of claims 2 to 6, wherein the determining a first deduced trajectory of the first intelligent driving device based on a first sampling acceleration and the first motion parameter comprises:

determining the first deduced trajectory based on a lateral offset of the first intelligent driving device, the first sampling acceleration, and the first motion parameter, wherein the lateral offset is an offset perpendicular to a traveling direction of the first intelligent driving device.

8. The method according to any one of claims 1 to 7, wherein before the obtaining a predicted motion trajectory and a second motion parameter of a first object, the method further comprises:

determining that a distance between the first object and the first intelligent driving device is less than or equal to a first distance threshold, and is greater than or equal to a second distance threshold.

9. The method according to any one of claims 1 to 8, wherein the first preset velocity is greater than or equal to 3 kilometers per hour and less than or equal to 15 kilometers per hour.

10. A motion trajectory planning apparatus, comprising an obtaining unit and a processing unit, wherein
the obtaining unit is configured to:

> obtain a planned traveling path and a first motion parameter of a first intelligent driving device, wherein the first motion parameter comprises a velocity and/or an acceleration of the first intelligent driving device; and obtain a predicted motion trajectory and a second motion parameter of a first object, wherein the second motion parameter comprises a velocity and/or an acceleration of the first object; and
> the processing unit is configured to:

>> when the planned traveling path overlaps the predicted motion trajectory, determine a planned motion trajectory of the first intelligent driving device based on the first motion parameter and the second motion parameter, wherein the planned motion trajectory comprises a motion trajectory in which the first intelligent driving device grabs a way of or yields to the first object at a first preset velocity; and
>> control the first intelligent driving device to travel based on the planned motion trajectory.

11. The apparatus according to claim 10, wherein the processing unit is configured to:

> determine a first deduced trajectory of the first intelligent driving device based on a first sampling acceleration and the first motion parameter, wherein the first sampling acceleration is an acceleration that is determined in a sampling space and that may be reached by the first intelligent driving device;
> determine a second deduced trajectory of the first object based on a second sampling acceleration and the second motion parameter, wherein the second sampling acceleration is an acceleration that is determined in the sampling space and that may be reached by the first object; and
> when the first deduced trajectory and the second deduced trajectory indicate that the first intelligent driving device does not collide with the first object, or that the first object collides with a side enclosure or a tail of the first intelligent driving device in a traveling direction of the first object at a first moment, determine the planned motion trajectory based on the first deduced trajectory and the second deduced trajectory, wherein the first moment is a moment after a current moment.

12. The apparatus according to claim 11, wherein the first motion parameter comprises the velocity and/or the acceleration of the first intelligent driving device, and the processing unit is configured to:

> determine a first deduced sub-trajectory based on the first sampling acceleration and the velocity and/or the acceleration of the first intelligent driving device, wherein a velocity of the first intelligent driving device at an end point of the first deduced sub-trajectory is the first preset velocity;
> determine a second deduced sub-trajectory based on the first preset velocity, wherein the end point of the first deduced sub-trajectory is a start point of the second deduced sub-trajectory; and
> determine the first deduced trajectory based on the first deduced sub-trajectory and the second deduced sub-trajectory.

13. The apparatus according to claim 11 or 12, wherein the processing unit is further configured to:

> determine a first game strategy based on the first deduced trajectory and the second deduced trajectory, wherein the first game strategy indicates the first intelligent driving device to grab a way of or yield to the first object at the first preset velocity; and
> when duration of the first game strategy is greater than a first time threshold, determine the planned motion trajectory based on the first game strategy, the planned traveling path, and the second deduced trajectory.

14. The apparatus according to claim 13, wherein the processing unit is configured to:

> determine, based on the planned traveling path and the second deduced trajectory, a time period in which a first location space of the first object occupies a second location space of the first intelligent driving device; and

determine the planned motion trajectory based on the first game strategy, the second location space, and the time period, wherein the planned motion trajectory comprises a trajectory in which the first intelligent driving device travels at the first preset velocity in the second location space, or the planned motion trajectory comprises a trajectory in which the first intelligent driving device travels at the first preset velocity in the time period.

15. The apparatus according to claim 13, wherein the processing unit is further configured to:
determine that a strategy cost of a deduced trajectory pair comprising the first deduced trajectory and the second deduced trajectory is the smallest.

16. The apparatus according to any one of claims 11 to 15, wherein the processing unit is configured to:
determine the first deduced trajectory based on a lateral offset of the first intelligent driving device, the first sampling acceleration, and the first motion parameter, wherein the lateral offset is an offset perpendicular to a traveling direction of the first intelligent driving device.

17. The apparatus according to any one of claims 10 to 16, wherein the processing unit is further configured to:
determine that a distance between the first object and the first intelligent driving device is less than or equal to a first distance threshold, and is greater than or equal to a second distance threshold.

18. The apparatus according to any one of claims 10 to 17, wherein the first preset velocity is greater than or equal to 3 kilometers per hour and less than or equal to 15 kilometers per hour.

19. A motion trajectory planning apparatus, comprising:

a memory, configured to store a computer program; and
a processor, configured to execute the computer program stored in the memory, so that the apparatus performs the method according to any one of claims 1 to 9.

20. An intelligent driving device, comprising the apparatus according to any one of claims 10 to 19.

21. A chip, wherein the chip comprises a processor and a data interface, and the processor reads, through the data interface, instructions stored in a memory, to perform the method according to any one of claims 1 to 9.

Intelligent driving device 100

Sensing system 120

Display apparatus 130

Computing platform 150

Processor 151

Processor 152

...

Processor 15n

FIG. 1

Moving carrier

Ultrasonic sensor

Camera

Medium-range/ Short-range radar

Camera

Medium-range/ Short-range radar

Camera

Lidar

Long-range radar

FIG. 2

FIG. 3

FIG. 4

500

S501: Obtain motion status information and road information of an interaction object whose distance to an ego vehicle is less than or equal to a preset distance

S502: Determine an interaction object whose predicted motion trajectory overlaps a planned traveling path of the ego vehicle as a preliminarily-screened game object

S503: Determine whether the preliminarily-screened game object is a dangerous object

Yes

No

S504: Determine a game strategy of the ego vehicle based on the preliminarily-screened game object

S505: End an autonomous driving decision-making and trajectory planning process

FIG. 5

Obstacle

Ego
vehicle

Interaction
object

FIG. 6(a)

FIG. 6(b)

FIG. 6(c)

FIG. 7

800

S801: Generate a sampling space

S802: Based on sampling in the sampling space, perform lateral path deduction on an ego vehicle based on a current location of the ego vehicle, and perform longitudinal trajectory deduction on the ego vehicle based on a current acceleration of the ego vehicle

S803: Based on sampling in the sampling space, perform lateral path deduction on a game object based on a current location of the game object, and perform longitudinal trajectory deduction on the game object based on a current acceleration of the game object

S804: Perform strategy cost evaluation on deduced trajectory pairs of the ego vehicle and the game object

S805: Determine an initial game strategy based on a deduced trajectory pair with a smallest strategy cost

S806: Perform stabilization processing on the initial game strategy to generate a final game strategy

FIG. 8

Lateral offset of an ego vehicle

| offset | minEgoLateralOffset | curEgoLateralOffset | maxEgoLateralOffset |
|---|---|---|---|
| minObjLateraloffset | ... | ... | ... |
| curObjLateraloffset | ... | ... | ... |
| maxObjLateraloffset | ... | ... | ... |

Lateral offset of a game object

Longitudinal non-creep acceleration of the ego vehicle

Longitudinal creep acceleration of the ego vehicle

| acc | -4 | -3 | -2 | -1 | 0 | 1 | 2 | 3 | -4 | -3 | -2 | -1 | 0 | 1 | 2 | 3 |
|---|---|---|---|---|---|---|---|---|---|---|---|---|---|---|---|---|
| -4 | ... | ... | ... | ... | ... | ... | ... | ... | ... | ... | ... | ... | ... | ... | ... | ... |
| -3 | ... | ... | ... | ... | ... | ... | ... | ... | ... | ... | ... | ... | ... | ... | ... | ... |
| -2 | ... | ... | ... | ... | ... | ... | ... | ... | ... | ... | ... | ... | ... | ... | ... | ... |
| -1 | ... | ... | ... | ... | ... | ... | ... | ... | ... | ... | ... | ... | ... | ... | ... | ... |
| 0 | ... | ... | ... | ... | ... | ... | ... | ... | ... | ... | ... | ... | ... | ... | ... | ... |
| 1 | ... | ... | ... | ... | ... | ... | ... | ... | ... | ... | ... | ... | ... | ... | ... | ... |
| 2 | ... | ... | ... | ... | ... | ... | ... | ... | ... | ... | ... | ... | ... | ... | ... | ... |
| 3 | ... | ... | ... | ... | ... | ... | ... | ... | ... | ... | ... | ... | ... | ... | ... | ... |

Longitudinal acceleration of the game object

FIG. 9

minEgoLateralOffset
or minObjLateralOffset

curEgoLateralOffset
or curObjLateralOffset

maxEgoLateralOffset
or maxObjLateralOffset

$s_e$CubicCurveThresh
or $s_o$CubicCurveThresh

$s_e$StartThresh
or $s_o$StartThresh

Traveling direction

Ego vehicle/Game object

FIG. 10

FIG. 11

FIG. 12

Game
object

Game
object

Ego vehicle

Ego vehicle

(a)

(b)

FIG. 13

```
                    ┌─────────────────────────────────────┐
                    │ A longitudinal decision-making tag of a │
                    │        previous frame is YD          │
                    └─────────────────────────────────────┘
```

A longitudinal decision-making tag of a current frame is YD

A longitudinal decision-making tag of a current frame is CFY

A longitudinal decision-making tag of a current frame is CFG

A longitudinal decision-making tag of a current frame is GW

Reset all timers

ydToCfyTimer = ydToCfyTimer + intervalTime

ydToCfgTimer = ydToCfgTimer + intervalTime

Reset all timers

ydToCfyTimer = 0 ◄─ Yes ─ ydToCfyTimer is greater than minTimerThres

ydToCfgTimer is greater than minTimerThres ─ Yes ► ydToCfgTimer = 0

No          No

The longitudinal decision-making tag of the current frame is changed to that of the previous frame

FIG. 14(a)

EP 4 563 427 A1

A longitudinal decision-making tag of a
previous frame is GW

| A longitudinal decision-making tag of a current frame is YD | A longitudinal decision-making tag of a current frame is CFY | A longitudinal decision-making tag of a current frame is CFG | A longitudinal decision-making tag of a current frame is GW |

| Reset all timers | gwToCfyTimer = gwToCfyTimer + intervalTime | gwToCfgTimer = gwToCfgTimer + intervalTime | Reset all timers |

gwToCfyTimer = 0  ← Yes — gwToCfyTimer is greater than minTimerThres

gwToCfgTimer is greater than minTimerThres — Yes → gwToCfgTimer = 0

No        No

The longitudinal decision-making tag of
the current frame is changed to that of the
previous frame

FIG. 14(b)

A longitudinal decision-making tag of a previous frame is CFY

- A longitudinal decision-making tag of a current frame is CFG → cfyToCfgTimer = cfyToCfgTimer + intervalTime → cfyToCfgTimer is greater than midTimerThres
  - Yes → cfyToCfgTimer = 0
  - No → The longitudinal decision-making tag of the current frame is changed to that of the previous frame

- A longitudinal decision-making tag of a current frame is GW → cfyToGwTimer = cfyToGwTimer + intervalTime → cfyToGwTimer is greater than maxTimerThres
  - Yes → cfyToGwTimer = 0
  - No → The longitudinal decision-making tag of the current frame is changed to that of the previous frame

- A longitudinal decision-making tag of a current frame is YD → cfyToYdTimer = cfyToYdTimer + intervalTime → cfyToYdTimer is greater than maxTimerThres
  - Yes → cfyToYdTimer = 0
  - No → The longitudinal decision-making tag of the current frame is changed to that of the previous frame

- A longitudinal decision-making tag of a current frame is CFY → Reset all timers

FIG. 14(c)

```
┌─────────────────────────────────────┐
│  A longitudinal decision-making tag of a │
│       previous frame is CFG          │
└─────────────────────────────────────┘
```

| A longitudinal decision-making tag of a current frame is CFG | A longitudinal decision-making tag of a current frame is YD | A longitudinal decision-making tag of a current frame is GW | A longitudinal decision-making tag of a current frame is CFY |
|---|---|---|---|

| Reset all timers | cfgToYdTimer = cfgToYdTimer + intervalTime | cfgToGwTimer = cfgToGwTimer + intervalTime | cfgToCfyTimer = cfgToCfyTimer + intervalTime |
|---|---|---|---|

cfgToYdTimer is greater than maxTimerThres

cfgToGwTimer is greater than maxTimerThres

cfgToCfyTimer is greater than midTimerThres

Yes

No          No          Yes          No          Yes

| cfgToYdTimer = 0 | The longitudinal decision-making tag of the current frame is changed to that of the previous frame | cfgToGwTimer = 0 | The longitudinal decision-making tag of the current frame is changed to that of the previous frame | cfgToCfyTimer = 0 |
|---|---|---|---|---|

FIG. 14(d)

Game object

t3             t2            t1            t0

s3, s2, s1, s0

Ego vehicle

FIG. 15

FIG. 16

FIG. 17

1800

S1810: Obtain a planned traveling path and a first motion parameter of a first intelligent driving device, where the first motion parameter includes a velocity and/or an acceleration of the first intelligent driving device

S1820: Obtain a predicted motion trajectory and a second motion parameter of a first object, where the second motion parameter includes a velocity and/or an acceleration of the first object

S1830: When the planned traveling path overlaps the predicted traveling trajectory, determine a planned motion trajectory of the first intelligent driving device based on the first motion parameter and the second motion parameter, where the planned motion trajectory includes a motion trajectory in which the first intelligent driving device grabs a way of or yields to the first object at a first preset velocity

S1840: Control the first intelligent driving device to travel based on the planned motion trajectory

FIG. 18

Apparatus 1900

Obtaining unit 1910

Processing unit 1920

FIG. 19

Apparatus 2000

Processor
2010

Memory
2030

Transceiver
2020

FIG. 20

## INTERNATIONAL SEARCH REPORT

| | International application No. |
|---|---|
| | **PCT/CN2022/113426** |

| **A.** | **CLASSIFICATION OF SUBJECT MATTER** |
|---|---|

B60W 30/09(2012.01)i;  G08G 1/16(2006.01)i;  G08G 1/0967(2006.01)i

According to International Patent Classification (IPC) or to both national classification and IPC

| **B.** | **FIELDS SEARCHED** |
|---|---|

Minimum documentation searched (classification system followed by classification symbols)

B60W30/-,  G08G1/-

Documentation searched other than minimum documentation to the extent that such documents are included in the fields searched

Electronic data base consulted during the international search (name of data base and, where practicable, search terms used)

EPODOC, WPI, CNKI, CNPAT, CNABS, CNTXT, ENTXTC: 华为, 自动 3d 驾驶, 智能 3d 驾驶, （交叉 or 十字）3d 路口, 车辆, 汽车, 交通, 障碍, 阻挡, 入侵, 路线, 路径, 轨迹, 规划, 加速, 匀速, 减速, 预设 3d 速度, 速度 3d 预设值, 蠕行, 平稳, 稳定性, 顺滑, huawei, automatic 3d driving, cross, car, vehicle, track, obstacle, routine, path, line, plan, intersection, position, accelerat+, decelerat+, speed, movement, stable

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 111775961 A (BEIJING BAIDU NETCOM SCIENCE AND TECHNOLOGY CO., LTD.) 16 October 2020 (2020-10-16) description, paragraphs [0034]-[0151], and figures 1-4 | 1-21 |
| Y | CN 112002144 A (UNIVERSITY OF SCIENCE AND TECHNOLOGY OF CHINA) 27 November 2020 (2020-11-27) description, paragraphs [0086]-[0096], and figure 6 | 1-21 |
| A | CN 112373485 A (NANJING UNIVERSITY OF AERONAUTICS AND ASTRONAUTICS) 19 February 2021 (2021-02-19) entire document | 1-21 |
| A | CN 114475585 A (APOLO INTELLIGENT TECHNOLOGY (BEIJING) CO., LTD.) 13 May 2022 (2022-05-13) entire document | 1-21 |
| A | CN 111845774 A (SHANGHAI UNIVERSITY) 30 October 2020 (2020-10-30) entire document | 1-21 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 January 2023** | **18 January 2023** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/113426** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2021005392 A1 (NISSAN MOTOR CO., LTD. et al.) 14 January 2021 (2021-01-14) entire document | 1-21 |

Form PCT/ISA/210 (second sheet) (January 2015)

## INTERNATIONAL SEARCH REPORT
### Information on patent family members

International application No.

**PCT/CN2022/113426**

| Patent document cited in search report | | | Publication date (day/month/year) | Patent family member(s) | | | Publication date (day/month/year) |
|---|---|---|---|---|---|---|---|
| CN | 111775961 | A | 16 October 2020 | KR | 20210041544 | A | 15 April 2021 |
| | | | | EP | 3819183 | A2 | 12 May 2021 |
| | | | | US | 2021188317 | A1 | 24 June 2021 |
| | | | | JP | 2021113049 | A | 05 August 2021 |
| | | | | CN | 111775961 | B | 04 January 2022 |
| | | | | EP | 3819183 | B1 | 07 September 2022 |
| CN | 112002144 | A | 27 November 2020 | CN | 112002144 | B | 01 March 2022 |
| CN | 112373485 | A | 19 February 2021 | | None | | |
| CN | 114475585 | A | 13 May 2022 | | None | | |
| CN | 111845774 | A | 30 October 2020 | CN | 111845774 | B | 03 December 2021 |
| WO | 2021005392 | A1 | 14 January 2021 | | None | | |

Form PCT/ISA/210 (patent family annex) (January 2015)